(19) Europäisches Patentamt
European Patent Office
Office européen des brevets

(11) **EP 3 438 911 A1**

(12) **EUROPEAN PATENT APPLICATION**
published in accordance with Art. 153(4) EPC

(43) Date of publication:
**06.02.2019 Bulletin 2019/06**

(51) Int Cl.:
***G06Q 30/06*** (2012.01)

(21) Application number: **17775144.3**

(22) Date of filing: **28.03.2017**

(86) International application number:
**PCT/JP2017/012755**

(87) International publication number:
**WO 2017/170607 (05.10.2017 Gazette 2017/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.03.2016 JP 2016067887**

(71) Applicant: **Hitachi High-Technologies Corporation Tokyo 105-8717 (JP)**

(72) Inventors:
• **MUKOH, Masaki**
**Tokyo 105-8717 (JP)**
• **TADA, Nobuyoshi**
**Tokyo 105-8717 (JP)**
• **NOGUCHI, Minori**
**Tokyo 105-8717 (JP)**
• **MATSUMORI, Masaki**
**Tokyo 105-8717 (JP)**
• **ISHITANI, Toshiaki**
**Tokyo 105-8717 (JP)**

(74) Representative: **Strehl Schübel-Hopf & Partner Maximilianstrasse 54 80538 München (DE)**

(54) **TRANSACTION ASSIST SYSTEM, METHOD, AND PROGRAM**

(57)     The present invention makes it possible to effectively determine the properties, quality, etc., of a material in a material transaction and to assist an operator involved with the transaction. A transaction assist system provided with: a means for accepting the setting of search conditions that include the properties of a material commodity; a material property database for storing material commodity information that includes the provider of the material commodity as well as the properties of a material commodity provided from the provider of the material commodity; a means for searching the material property database for a material commodity that satisfies at least some of the search conditions; an acquisition means for acquiring, with respect to the material commodity that satisfies at least some of the search conditions, at least one of additional information added to the material commodity information stored in the material property database and collation confirmation collated with the material commodity information stored in the material property database; and a means for specifying a recommended material commodity recommended for the search conditions and the provider of the recommended material commodity on the basis of the search result by the search means and the acquisition result by the acquisition means.

FIG. 1

## Description

### TECHNICAL FIELD

The present invention pertains to a system, a method and a program, which enable support of a transaction between a purchaser who purchases a material defined as a commercial product and a provider (vendor) of the material commercial product.

### BACKGROUND ART

A material user, when purchasing the material, has hitherto determined a material maker as a seller (vendor) by referring to a spec sheet, a catalogue and other equivalent information provided by a material maker, checking transaction past results in some cases, and further ordering a material sample to evaluate the material by the material user himself or herself. However, a conventional procedure is deficient for items and categories of information of the spec sheet or the catalogue provided by the material maker as the case may be. In such a case, with respect to unknown information about items, properties and compositions given in the spec that are desired to be specified by the material user in terms of selecting the material and the material maker, the material sample is often evaluated beforehand by the material user himself or herself. Exaggerated expressions are contained in the spec sheet and the catalogues provided by the material maker in some cases. Accordingly, there is a case disabling the material user from determining, based on only the spec sheet and the catalogue, whether the material satisfies specifications desired by the material user, and the material user himself or herself possibly carries out the pre-evaluation as a countermeasure.

### [Documents of Prior Arts]

### [Patent Documents]

[Patent Document 1] Japanese Patent Application Laid-Open Publication No. 2011-48667
[Patent Document 2] Japanese Patent Application Laid-Open Publication No. 2009-129393
[Patent Document 3] Japanese Patent Application Laid-Open Publication No. 2003-345862

[Non-Patent Documents]

[Non-Patent Document 1] "Interrelationship between Grain Size and Hardness Distributions during Grain Growth in Iron" Yoshimasa Takayama, and five others, pp.579-584, 6th issue, 53rd vol. published in June 1989, Journal of the Japan Institute of Metals and Materials, the Iron and Steel of Japan, General Incorporated Association.
[Non-Patent Document 2] "Hierarchical Strain Distribution Analysis Formed in DP Steel Using a Combination of Metallographic Image and Digital Image Correlation Method", Nobuo Nakada, and four others, pp.58-65, 10th issue, 100th vol., published on 30th in September, 2014, Iron and Steel, the Iron and Steel Institute of Japan, General Incorporated Association.

### SUMMARY OF THE INVENTION

### [Problems to be solved by the Invention]

As described above, the material user, when purchasing the material, evaluates, analyzes and inspects the sample by himself or herself. The material user requires a considerable period of time for determining the seller (vendor). The material user does not have any recognition means effective in recognizing that results of evaluating, analyzing and inspecting the material at a purchase determining time are maintained even after initiating a transaction.
Under such circumstances, it is an object of the present invention to make supportable business operators involved in a transaction in order to enable a material transaction to be simply stably carried out by effectively referring to properties or qualities of the materials in the material transaction.

**[Means for solving the Problems]**

A first aspect of the present invention may be exemplified as a transaction support system that supports transactions of a variety of materials as commercial products. The transaction support system includes: means to accept setting of search conditions containing properties of material commercial products; and a material property database to store material commercial product information containing the properties of material commercial products provided from providers of the material commercial products, and the providers of the material commercial products. The transaction support system further includes: means to search the material property database for the material commercial product fulfilling at least a part of search conditions with the setting being accepted; and acquiring means to acquire at least one of added information added to material commercial product information stored in the material property database and check information checked against the material commercial product information stored in the material property database with respect to the material commercial product fulfilling at least a part of the search conditions with the setting being accepted. The transaction support system still further includes: means to specify recommended material commercial products and providers of the recommended material commercial products, the commercial products being recommended for the search conditions with the setting being accepted based on a search result given by the search means and an acquiring result given by the acquiring means.

According to a second aspect of the present invention, a transaction support system includes: means to accept an input of object images containing an image captured by shooting at least a part of a surface or a section of a material commercial product. The transaction support system further includes: means to obtain first property information about one property of the material commercial product from the object images; and means to read second property information about one property from a material property database storing property information about the properties of the material commercial product provided from a supplier of the material commercial product. The transaction support system still further includes: means to issue an alarm to a recipient of the material commercial product when the first property information does not match with the second property information with respect to one property of the commercial product.

**[Effect of the Invention]**

According to the first aspect, the transaction support system acquires at least one of the added information added to the material commercial product information stored in the material property database the check information checked against the material commercial product information stored in the material property database with respect to the material commercial product fulfilling at least a part of the search conditions. The transaction support system is therefore enabled to execute searching by using information other than the properties of the material commercial product provided from the provider of the material commercial product. Hence, the transaction support system enables the material user to simply specify a provider of the material having the property and a quality that are desired by the material user with high accuracy by reducing a period of time or a cost for determining the material provider for the material user in the material transaction.

According to the second aspect, the transaction support system issues the alarm when the first property information about one property, obtained from the accepted object images, of the material commercial product does not match with the second property information provided from the provider of the material commercial product, and is therefore enabled to simply continuously manage the property and the quality of the material commercial product as a transaction target by acquiring the object images.

As described above, the transaction support system enables the material user to effectively refer to the property or the quality of the material. The transaction support system is therefore enabled to support the business operators involved in the transaction so that the business operators involved in the transaction of the material simply perform the material transaction with stability.

**BRIEF DESCRIPTION OF THE DRAWINGS**

FIG. 1 illustrates a configuration of a transaction support system.
FIG. 2 is a diagram illustrating a configuration of an information processing apparatus.
FIG. 3 is a diagram illustrating a data structure of a material property database.
FIG. 4 is a diagram illustrating a data structure of a priori prediction database.
FIG. 5 is a diagram illustrating a data structure of a transaction past result database.
FIG. 6 is a flowchart illustrating processes of the transaction support system according to an Embodiment 1.
FIG. 7 is a flowchart illustrating an example of processes of obtaining hardness degree of a material, based on microscopic images .

FIG. 8 is a flowchart illustrating processes of obtaining a distortion distribution based on digital images captured by a camera.

FIG. 9 is a diagram illustrating a configuration of the transaction support system according to an Embodiment 2.

FIG. 10 is a flowchart illustrating a comparative alarm process in the Embodiment 2.

FIG. 11 illustrated one example of a user interface for designating a maximum flexure quantity given when applying a load.

FIG. 12 is a diagram illustrating the user interface to accept conditions for a structural material.

FIG. 13 is a flowchart illustrating processes of the transaction support system according to an Embodiment 3.

## DESCRIPTION OF EMBODIMENTS

[Mode for Carrying out the Invention]

A transaction support system according to one embodiment will hereinafter be described with reference to the drawings. Configurations of the following embodiments are exemplifications, and the present transaction support system is not limited to the configurations of the embodiments.

**[Embodiment 1]**

**<System Configuration>**

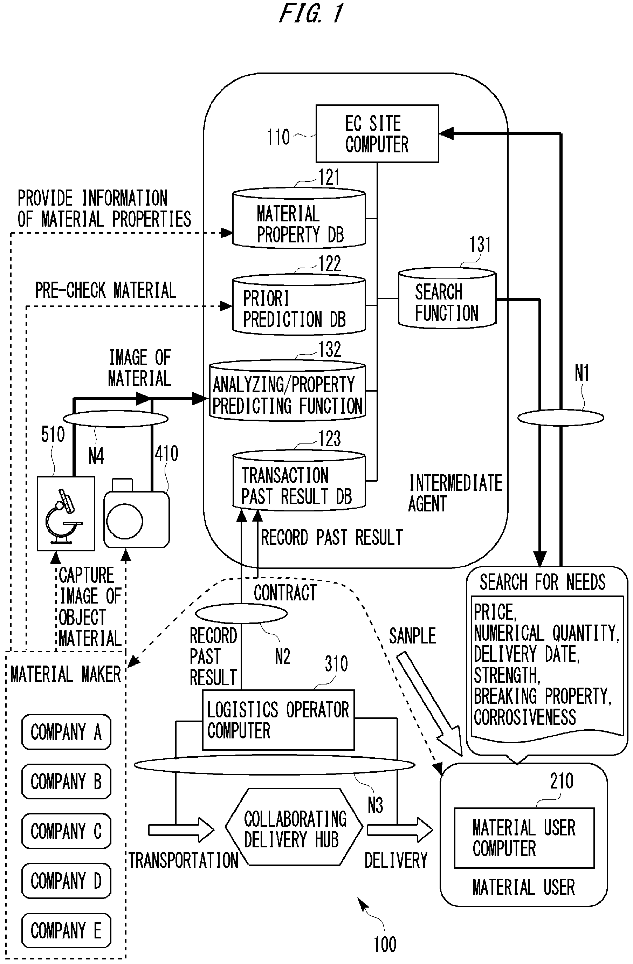

FIG. 1 illustrates a configuration of a transaction support system 100 according to an Embodiment 1. The transaction support system 100 supports a transaction between a material user and a material maker. The material user is a business operator who purchases materials, develops and manufactures a variety of products by using the purchased materials, or vends the products. The material user is a business enterprise that practices a business in business fields instanced by civil engineering, construction, machinery, home electronics, office equipment, various parts (machinery, electric and electronic parts) . The material user has a material user computer 210, and searches for a purchase target material.

The material maker is a business operator who provides the material user with the materials. Hereinafter, in the Embodiment 1, the material maker supplies the materials instanced by inorganic materials, metals called, e.g., iron, steel or a steel product. The steel or the steel product includes alloys, e.g., stainless steel.

As in the Figure, in the Embodiment 1, a business operator (who will hereinafter be termed an intermediate agent (broker)) who supports the material maker and the material user gets involved in the transaction to smoothly make the transaction between the material maker and the material user. The intermediate agent is called, e.g., a trading company, a wholesaler, or a business agent. However, an affiliate company of the material maker, one division of the material maker, or a collaborative body organized by a plurality of material makers functions as the intermediate agent as the case may be. An affiliate company of the material user, one division of the material user, or a collaborative body organized by a plurality of material users functions also as the intermediate agent as the case may be.

The material user has the material user computer 210. The material user computer 210 is, e.g., a personal computer used by office staff and employees of the business operator, i.e., the material user. The material user computer 210 may also be a server or another equivalent apparatus to provide services to the personal computer user used by the material user.

The intermediate agent has an EC (E-Commerce) site computer 110. The EC site computer 110 includes databases, i.e., a material property database (DB) 121, a priori prediction DB 122, and a transaction past result DB 123. The EC site computer 110 provides information processing functions, i.e., a search function 131 and an analyzing/property predicting function 132. The EC site computer 110 may be a single computer and may also be an aggregation of the plural computers, e.g., a system called "Cloud". For example, the respective databases may be each configured in one or a plurality of database servers.

A camera 410, a microscope 510 and other equivalent devices for inspecting the materials are connected to the EC site computer 110. The camera 410, the microscope 510 and other equivalent devices each desirably include a storage means, a communication means and a control means, and are connectable to the EC site computer 110 via a communication network N4 and other equivalent networks. For example, the camera 410 may also be a mobile phone, a smartphone, a tablet terminal including a touch panel and a camera, a portable personal computer and other equivalent devices. The microscope 510 may also be, e.g., an instrument that includes an image capturing device for generating digital images, the storage means, the communication means and the control means in addition to an optical system, and is connected to the EC site computer 110 via the communication network N4.

In the illustrated example, a collaborating delivery hub is provided between the material maker and the material user. The material maker lets a logistics operator on consignment transport the materials manufactured or sold by a self company to the collaborating delivery hub. The logistics operator delivers the materials transported to the collaborating delivery hub to the material maker as a delivery destination. The logistics operator has a logistics operator computer 310 that manages the transportation of the materials, a delivery consigned status, a vehicle traveling status, a completion of delivery and other equivalent items.

As in the Figure, the EC site computer 110 and the material user computer 210 are interconnected via a communication network N1. The EC site computer 110 and the logistics operator computer 310 are interconnected via a communication network N2. The logistics operator computer 310 is connected to a mobile terminal carried by a driver or an in-vehicle terminal via a communication network N3. As described above, the camera 410, the microscope 510 and the EC site computer 110 are interconnected via the communication network N4. The communication networks N1, N2, N3, N4 may configure one public communication network instanced by the Internet. At least one of the communication networks N1, N2, N3, N4 may also, however, be one individual private network, e.g., Virtual Private Network (VPN) and other equivalent networks.

The material property DB 121 stores items of data representing properties, specifications, qualities and other equivalent items of a variety of materials on an every material maker basis, which are based on information provided by the respective material makers. The information provided from the material maker is called, e.g., a spec sheet or a catalogue. These pieces of information are provided as a document called a "mill sheet" in the field of irons or steel products. These pieces of information may be distributed as paper documents and may also be distributed as electronic documents. The intermediate agent or an administrator, consigned by the intermediate agent, of the material property DB 121 may input the information distributed, disclosed or opened to the public from the respective material makers to the material property DB 121. The EC site computer 110 or a computer in collaboration with the EC site computer 110 may acquire the information from Web sites of the respective material makers through a computer program instanced by a search engine, and may store the acquired information in the material property DB 121. The material property DB 121 may be said to be one example of a "material property database to store material commercial product information containing properties of material commercial products provided from providers of the material commercial products, and the providers of the material commercial products".

The priori prediction DB 122 stores data obtained through a route different from the data stored in the material property DB 121. The priori prediction DB 122 may be said to be one example of a "priori prediction database" to store an analyzed property of the material commercial product that is obtained by analyzing the material commercial product. Note that the priori prediction DB 122 may also be said to be one example of the "material property database" in terms of storing properties of various types of materials. The priori prediction DB 122 stores, e.g., data obtained such that an evaluator of the intermediate agent or a requestee receiving a request from the intermediate agent tests, analyzes, makes an analytical study or evaluates the respective materials. The requestee from the intermediate agent includes material makers other than the material maker of a manufacturer/vendor who manufactures and vends a target material for the test and other equivalent purposes. The requestee from the intermediate agent further includes an affiliate company of the material user, one division of the material user, or a collaborative body organized by a plurality of material users in addition to public research institutions, universities or colleges and other equivalent facilities. Note that the manufacturer/vendor of the material is also referred to as a "provider". The manufacturer/vendor of the material includes, e.g., the material maker and a business operator having a responsibility for the properties of the materials to be sold by business operators who sell the materials .

The priori prediction DB 122 contains data representing the same items of properties, specifications performances and qualities with respect to the same materials as those specified by the data contained in the material property DB 121. Herein, the "same material" connotes that the material maker who manufactures the material is identified by the commercial product (e.g., a model number) defined as the material. "The same items of properties, specifications performances and qualities" connote having the same nomenclature, the same evaluation method and the same criterion of the evaluation. A scheme that the priori prediction DB 122 contains the same items of properties, specifications and qualities as those of the material property DB 121 as described above, intends to make a comparison with and a check against the data contained in the material property DB 121, and to resultantly verify reliability of the data of the material property DB 121.

The priori prediction DB 122 further contains other items of data with respect to the same materials as those specified by the data contained in the material property DB 121. "Other items of data" connote items of value-empty fields in the material property DB 121 or properties, specifications, performances and qualities of items not entered in the material property DB 121. As described above, the data stored in the material property DB 121 are created based on the information provided from the material makers. Therefore, the material property DB 121 does not necessarily cover the items of properties, specifications and qualities, which are desired by the material users. Such being the case, the intermediate agent acquires the data representing the multiple properties, specifications, performances and qualities with respect to the material concerned via a route other than the route for acquiring the information provided from the material maker, i.e., the manufacturer/vendor of the material, and stores the acquired data in the priori prediction DB 122.

A method of acquiring the data stored in the priori prediction DB 122 is prescribed based on, e.g., the JIS standard. The data acquiring method is not necessarily, however, limited to the JIS standard, but includes methods of testing, analyzing, analytically studying or evaluating the materials, which are advocated by associations of foreign countries, or by associations of domestic and international industrial segments, and methods that are newly proposed by researchers and other equivalent experts. The analysis of the material includes an analysis based on information processing in addition to the analyses of compositions and other equivalent elements . The analysis based on the information processing is a method of acquiring and comparing digital images taken by capturing images of patterns depicted on surfaces of the materials before and after the materials have got deformed by using, e.g., a digital image correlation method (DIC method) and other equivalent methods, and thereby obtaining distortion profiles of respective portions of the materials. Another example of the analysis based on the information processing is a method of obtaining grain fineness numbers and other equivalent items prescribed by the American Society for Testing and Materials (ASTM) standard, which are obtained by analyzing images of boundary line patterns (grain boundary patterns) of crystal grains that are acquired from material surface photo images captured by the microscope. The EC site computer 110 executes the DIC method by the analyzing/property predicting function 132 or the method of obtaining the grain fineness numbers and other equivalent items as one example of "estimation means to estimate properties of the material commercial product by analyzing an object image captured by shooting at least a part of a surface or a section of the material commercial product".

It involves working the material, for example, in the following steps to obtain the grain boundary pattern of the crystal grains from the material surface photo captured by the microscope.

(Step 1) Slicing of Sample

Slicing of a sample is attained by machine working or electric discharge machining. A method using a cutting grind stone is one example of the machine working.

(Step 2) Embedding

An embedding material is embedded in a cutting surface . The embedding material involves using, e.g., an organic material. A polymerized polymer obtained by adding a catalyst to polymer (a phenolic resin, an epoxy resin and other equivalent resins) is given as one example of the organic material.

(Step 3) Polishing

Roughness of a polished surface is stepwise reduced to fineness, and the cutting surface, into which the embedding material is embedded, is polished.

(Step 4) Etching

A stepped portion is provided on a section of the sample by etching to deflect a reflecting direction of light, whereby a metallographic structure appears on the image of the microscope. There adopted, e.g., a method of dissolving from the section of the sample by chemical reaction, a method of dissolving metal ions by electrochemical reaction.

(Step 5) Observation of Structure

A section of an imaging sample is enlarged by an optical microscope, and a digital image is obtained by an image capturing device. The grain boundary pattern of the crystal grains of the metal material is obtained in the steps described above. A magnification of the optical microscope is several tens of times through several hundreds of times.

The data stored in the priori prediction DB 122 include indirect data that are indirectly obtained by further analyzing direct data in addition to the data (direct data obtained from a direct material) given by testing, analyzing, analytically studying or evaluating the material itself. The indirect data are exemplified by data about material hardness degree estimated from correlation data between a grain size and hardness degree by analyzing, e.g., an image of the grain size of the material, which is captured by the microscope and other equivalent tools.

The transaction past result DB 123 records past results of transactions between the material user and the material maker. The transaction past result may be recorded, e.g., when a sales contract is established between the material user and the material maker though an intermediary of the intermediate agent. For example, the transaction past result may also be recorded when completing the delivery of the material to the material user defined as the material delivery destination in a material transportation service consigned to a logistics operator from the material maker. For example, logistics operator computer 310 to manage the delivery of the material, when accepting completion of the delivery of the material from a driver and other equivalent persons via the communication network N3, may notify the EC site computer 110 of the transaction past results via the communication network N2.

A Central Processing Unit (CPU) of the EC site computer 110 running a computer program provides the search function 131 and the analyzing/property predicting function 132. However, at least a part of the search function 131 and the analyzing/property predicting function 132 may be provided by hardware circuits . The search function 131 provides a Web site on the Internet and accepts search conditions as needs about the material from the material user computer 210 and other equivalent apparatuses by way of one example of "means to accept setting of search conditions including properties of a material commercial product". The search conditions are, e.g., a name, a price, a quantity, a delivery date and properties of the material. The properties of the material are exemplified by a composition, strength, a breaking property and corrosiveness. Accordingly, the material user specifies the search conditions on the Web site provided by the search function 131, and is thereby enabled to find out, narrow down and referring to candidates of a desired material.

The search function 131 executes the search as one example of "means to search the material property DB 121 for the material commercial product fulfilling at least a part of search conditions". To be specific, the search function 131, upon accepting the search conditions, searches for and narrows down the material makers and the model numbers of the materials, which have a possibility of meeting the needs of the material user, from the accepted search conditions on the basis of the data of the material property DB 121, the priori prediction DB 122 and the transaction past result DB 123. Herein, when searching for and narrowing down the material makers and the model numbers of the materials having the possibility of meeting the needs of the material user, the EC site computer 110 may not determine the material makers and the model numbers, which fulfill all of the search conditions. For instance, the EC site computer 110 may cause a search result to include the material makers and the model numbers of the materials, which fulfill a predetermined or more number of items of the search conditions.

For example, there is such a case that data of a part of items of the specified search conditions do not exist in the material property DB 121 based on the information provided from the material maker. The EC site computer 110 tries to fulfill the search conditions with a further supplement of the data of the priori prediction DB 122 with respect to such material makers and model numbers of the material that all of the search conditions are unable to be fulfilled by only the data of the material property DB 121. Such material makers and model numbers of the materials exist that the data of the material property DB 121 and the data of the priori prediction DB 122 have different data values with respect to the same item. Such being the case, the EC site computer 110 acquires, from the priori prediction DB 122, data corresponding to the data retrieved from the material property DB 121. As described above, the EC site computer 110 executes a process of the search function 131 by way of one example of "acquiring means to acquire at least one of added information added to material commercial product information stored in the material property database and check information checked against the material commercial product information stored in the material property database with respect to the material commercial product fulfilling at least a part of the search conditions".

The EC site computer 110 determines whether the material maker and the model number of the material fulfill the search conditions by being replaced or modified by the values of the priori prediction DB 122 with respect to the such an item that the data of the material property DB 121 and the data of the priori prediction DB 122 have the different values.

The EC site computer 110 modifies the search result by the analyzing/property predicting function 132 as one example of "estimation means" . In other words, the EC site computer 110 further tries to supplement the search result with a result of the properties predicted by the analyzing/property predicting function 132 with respect to the material makers and the model numbers of the materials that are unable to fulfill all of the search conditions by only the data of the material property DB 121. The EC site computer 110 determines whether the material maker and the model number of the material fulfill the search conditions by making replacement or modification with the result of the properties predicted by the analyzing/property predicting function 132 with respect to such an item that the data of the material property DB 121 are different from the result of the properties predicted by the analyzing/property predicting function 132. Herein, a phrase "making the replacement" connotes "replacing the values". Further, a phrase "making the modification" connotes that the values to be modified reflect in the search result by, e.g., taking a weighting average of the data of the material property DB 121 and the values to be modified. A weight in this case may be an equality weight (one-to-one weight), and may also set one weight larger.

There exists a plurality of couples of the material makers and the model numbers of materials as the search results for the search conditions, in which case the EC site computer 110 ranks the search results and sorts the search results in the sequence from a highest rank. However, when indispensable conditions are specified in the search conditions, the EC site computer 110 may exclude the search results not fulfilling the indispensable conditions. The EC site computer 110 transmits the thus-created search results to the material user computer 210.

Such indispensable conditions exclude the non-fulfilling search results, thereby enabling it to be reduced that the unnecessary search results are mixed as noises in the search results. On the other hand, the EC site computer 110 takes a method of ranking the search results for the search conditions, and is thereby enabled to leave a large number of options for the material users by listing the material makers and the model numbers of materials that have a probability of being adoptable by the material users and consigning final decisions to determinations of the material users in place of providing the results strictly fulfilling the search conditions to the material users . Thus, the EC site computer 110 executes a process of the search function 131 by way of one example of "means to specify recommended material commercial products and providers of the recommended material commercial products, which are recommended for the search conditions, based on a search result given by the search means and an acquiring result given by the acquiring means".

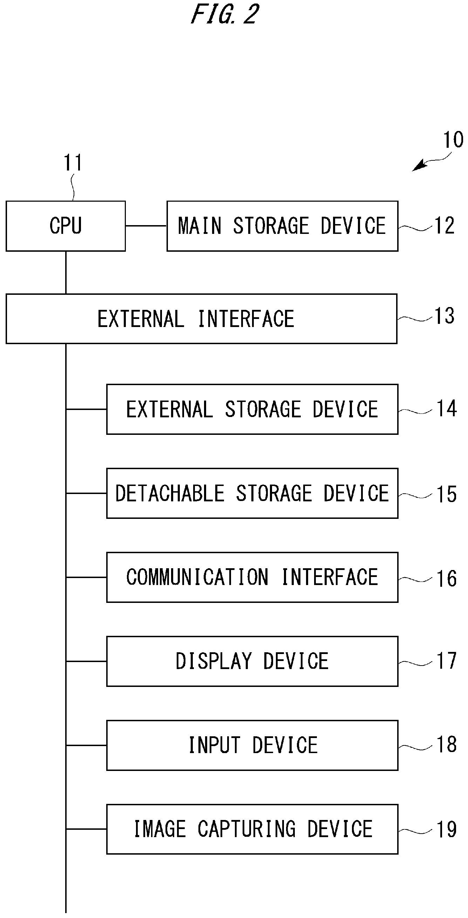

FIG. 2 is a diagram illustrating a hardware configuration of an information processing apparatus 10 employed as the EC site computer 110, the material user computer 210, the logistics operator computer 310, the camera 410, a mobile terminal used by a driver of the logistics operator, and other equivalent apparatuses in the Embodiment 1. The information processing apparatus 10 includes CPU 11, a main storage device 12, an external interface 13 and external devices connected via the external interface 13, and executes information processing based on a computer program. The external devices may be exemplified by an external storage device 14, a detachable storage device 15, a communication interface 16, a display device 17, an input device 18, and an image capturing device 19. The image capturing device 19 may not, however, be provided in the EC site computer 110, the material user computer 210 and the logistics operator computer 310.

A CPU 11 runs the computer program deployed in an executable manner on the main storage device 12, and provides functions of control means of the EC site computer 110, the material user computer 210, the logistics operator computer 310, the camera 410, and the microscope 510 and the mobile terminal of the logistics operator as one example of the transaction support method. The main storage device 12 stores the computer program run by the CPU 11 and the data processed by the CPU 11. The main storage device 12 is instanced by Dynamic Random Access Memory (DRAM), Static Random Access Memory (SRAM), and Read Only Memory (ROM) . However, the ROM includes a rewritable nonvolatile memory, e.g., a flash memory and other equivalent memories. The external interface 13 establishes connections between internal circuits of the CPU 11 and the external devices. The external interface 13 is called, e.g., a chipset and other equivalent nomenclatures in some cases.

The external storage device 14 is used as, e.g., a storage area that is auxiliary to the main storage device 12, and stores the computer program run by the CPU 11 and the data processed by the CPU 11. The external storage device 14 is instanced by a hard disk drive and a Solid State Drive (SSD) . The detachable storage device 15 is a drive of a detachable storage medium. The detachable storage medium is instanced by Blu-ray Disc, Digital Versatile Disk (DVD), Compact Disc (CD) and a flash memory card.

The communication interface 16 transfers and receives the data to and from other devices on the network. For example, the EC site computer 110 and the material user computer 210 mutually perform the communications via the communication interface 16. The EC site computer 110 acquires transaction past result data from the logistics operator computer 310 via the communication interface 16.

The display device 17 is instanced by a liquid crystal display, and an electroluminescence panel. The input device 18 is instanced by a keyboard, and a pointing device. In the Embodiment 1, the pointing device is exemplified by a mouse. The image capturing device 19 is instanced by Charge Coupled Device (CCD) image sensor, and Complementary Metal Oxide Semiconductor (CMOS) image sensor.

**<Data Structure>**

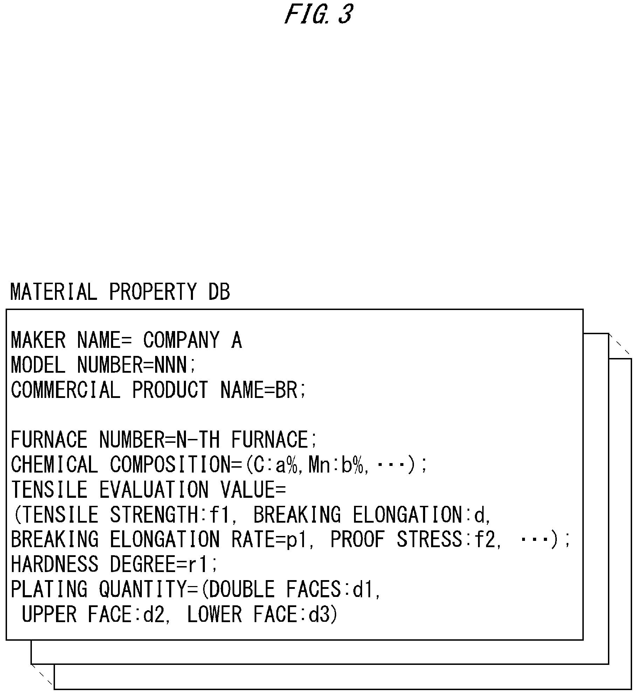

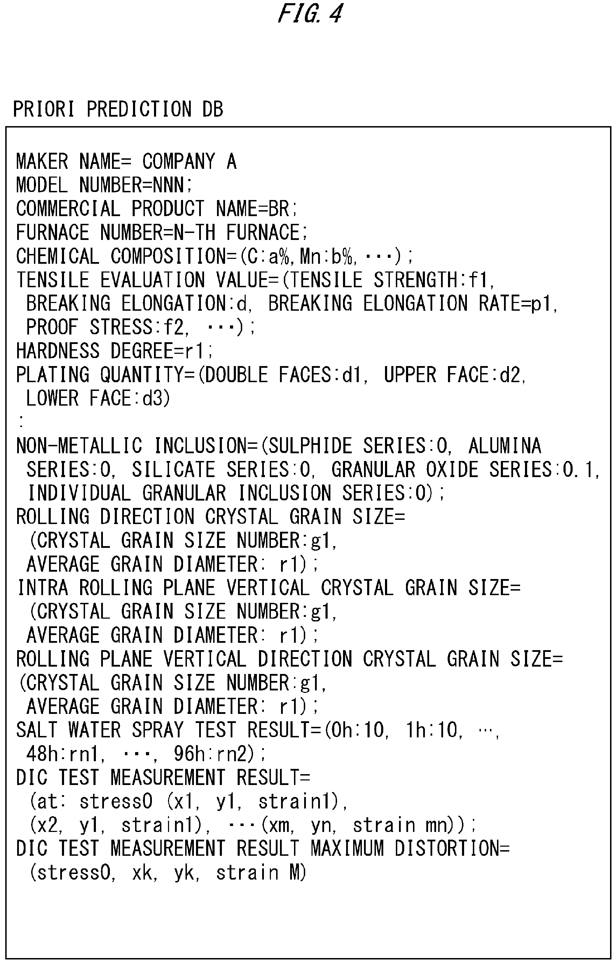

FIG. 3 illustrates a data structure of the material property DB 121. In an example of FIG. 3, the material property DB 121 stores data in a Key-Value format. The Key-Value format is a format of listing "key=value" (key=value; key=value; ···) with delimiters (;). This example exemplifies a set of property data specified by the material maker and the model number. To be specific, the property data of the material property DB 121 have items such as "maker name=company A; model number=NNN; furnace number=N-th furnace; chemical composition=(C:a%,Mn:b%, ···); tensile evaluation value=(tensile strength:f1, breaking elongation:d, breaking elongation rate=p1, proof stress:f2, ···); hardness degree=r1; plating quantity=(double faces:d1, upper face:d2, lower face:d3);. Semicolon (;) is a delimiter that delimits each item. Note that a delimiter, though omitted in FIG. 4, for delimiting the set of data specified by the material maker and the model number may be written. This delimiter is instanced by angle brackets "<>" for bracketing the set of property data as in FIG. 3. However, the set of property data may be structured to cover the item of the maker name through an item located one before the item of a next maker name. Note that the Key-Value formatted data may involve adopting a format having a hierarchical structure, e.g., a Markup language instanced by HyperText Markup Language (HTML) and Extensible Markup Language(XML).

The maker name is a nomenclature that specifies the material maker. Though omitted in FIG. 3, the set of property data may contain, together with the maker name, identifying information for identifying a business operator such as the maker, in which the identifying information is instanced by a business operator identification code and a business operator identification number. The model number is information for specifying the material that is manufactured and sold by the maker. The commercial product name is a commercial product name of the material commercial product. The furnace number is an address that indicates dissolving information of the maker when the material is a metal instanced by a steel product.

The chemical composition is, when the material is the metal instanced by the steel product, a ratio of an element other than a metal element contained in the metal concerned. The tensile evaluation value is instanced by a tensile strength of the material, an elongation when a fracture occurs, and an elongation rate and a proof stress when the fracture occurs.

The hardness degree is a measured hardness of how much hard the material is. The hardness degree involves using a direct method of obtaining the hardness degree from a relationship between a load and a deformation quantity by applying the load to the material, and an indirect method of obtaining the hardness degree from a grain size of the material. The direct method may be exemplified by Vickers hardness test prescribed by JIS. The Vickers hardness test is that a diamond indenter taking a square pyramid shape is intruded into a surface of a sample (sample piece), and, after cancelling a testing force thereof, a length of a diagonal line of a recess left on the surface is measured.

The plating quantity is a plating thickness measured with respect to the material concerned. For example, in the case of a tabular steel product, there are stored plating thicknesses of the double faces, the upper face and the lower face. However, the value of each of the items of the material property DB 121 is nothing but one representative value, though being actually analyzed and tested values of the material provided from the material maker. Accordingly, when lots are not sufficiently managed, the actual property value differs on a lot-by-lot basis as the case may be.

Note that the material property DB 121 may also be, e.g., a table-formatted database of fixed-length records in place of the Key-Value format described above. Specifically, the value of each item of the material property DB 121 may also be stored in an entry corresponding to each column of one raw of the table. Accordingly, in the Embodiment 1, there is no limit to the data storage format of the material property DB 121.

FIG. 4 illustrates a data structure of the priori prediction DB 122. Similarly to FIG. 3, the priori prediction DB 122 in FIG. 4 is illustrated in the Key-Value format. However, the value of each of the items of the priori prediction DB 122 in FIG. 4 may also be stored in the fixed-length record in place of the Key-Value format. To be specific, the value of each item of the priori prediction DB 122 may also be stored in the entry corresponding to each column of one raw of the table-formatted data.

As in FIG. 4, the items of the maker name through the plating quantity in the items of the priori prediction DB 122 are the same as those of the material property DB 121 in FIG. 3. Values of results of testing, analyzing, analytically studying or evaluating the materials concerned by the intermediate agent independently of the material maker, are retained in the same items of the priori prediction DB 122 as those of the material property DB 121. Values of results of testing, analyzing, analytically studying or evaluating the materials concerned by a third party consigned by the intermediate agent other than the material maker, are contained in the same items of the priori prediction DB 122 as those of the material property DB 121. The values of the same items of the priori prediction DB 122 as those of the material property DB 121 are used for verifying the material property DB 121 by comparing and checking these values with and against the values of the items of the material property DB 121.

The priori prediction DB 122 retains data of items different from the items of the material property DB 121. To be specific, in the example of FIG. 4, the priori prediction DB 122 retains "non-metallic inclusion=(sulphide series:0, alumina series:0, silicate series:0, granular oxide series:0.1, individual granular inclusion series:0); rolling direction crystal grain size=(crystal grain size number: g1, average grain diameter: r1) ; intra rolling plane vertical crystal grain size=(crystal grain size number:g1, average grain diameter: r1); rolling plane vertical direction crystal grain size=(crystal grain size number:g1, average grain diameter: r1); salt water spray test result= (0h: 10, 1h:10, ···, 48h:rn1, ···, 96h:rn2); DIC test measurement result". Thus, the items, not existing in the material property DB 121, of the items of the priori prediction DB 122 are the items added by the intermediate agent or a consignee of the intermediate agent. The addition of these items enables the EC site computer 110 to narrow down the material makers and the materials, which are matched with the needs of the material user.

The non-metallic inclusion in the items added to the priori prediction DB 122 exhibits a number of the inclusions classified such as the sulphide series, the alumina series, the silicate series, the granular oxide series, and the individual granular inclusion series. In the example of the Figure, type of each non-metallic inclusion is associated with the numerical value via the colon (:). The numerical value associated with the type of each non-metallic inclusion is a number of foreign substances observed within the material (e.g., a sheet of steel product) becoming a testing object. The non-metallic inclusion may be said to be a substance produced within the steel during a steel manufacturing process. The non-metallic inclusion exerts influence on the steel properties instanced by moldability, ductility, fatigue strength and corrosion resistance of the steel. It is important in terms of managing the steel quality to analyze and classify the non-metallic inclusions of the steel and to record analyzed results.

The crystal grain sizes are given in triaxial directions. The triaxial directions are instanced by a rolling direction, an intra rolling plane vertical direction and a rolling plane vertical direction. The rolling direction is a direction in which the steel product is stretched when rolling the steel product. The rolling direction may also be defined as a longitudinal direction of the rolled steel product or a direction in which the steel product is wound as a roll. The intra rolling plane vertical direction is a direction parallel to the plane of the rolled tabular steel product and orthogonal to the rolling direction.

The rolling plane vertical direction is a direction of a normal line vertical to the plane of the rolled tabular steel product.

The rolling direction crystal grain size is a crystal grain size within a section vertical to the rolling direction of the steel product, and retains the crystal grain size number and the average grain diameter. The crystal grain size number G is calculated such as $G = (\log n/\log 2) + 1$ by using a number $n$ of the crystal grains within 1 square inch. The number $n$ of the crystal grains within 1 square inch is calculated by image processing of a computer that runs an image analyzing program. Note that the average grain diameter for the crystal grain size number G may be obtained from a predetermined conversion chart. Similarly, the steel product intra rolling plane rolling vertical direction crystal grain size is a crystal grain size within a section with the normal line being a direction vertical to the rolling direction within the rolling plane of the steel product. The steel product rolling plane vertical direction crystal grain size is a crystal grain size within a plane vertical to the steel product.

The salt water spray test result represents a relationship between elapse time after spraying salt water over the surface of the steel product and an evaluation number (0 through 10) indicating a condition of an area in which corrosion occurs. Herein, the evaluation number is a number that is set for a corrosion area rate, and "the evaluation number=10" indicates that the corrosion area rate is "0".

The DIC test measurement results depict a distortion distribution in each region on an observation surface according to Digital Image Correlation (DIC) . The DIC method is a method of forming a random pattern on the steel product, then obtaining correlativity between image regions before and after being deformed in a way that compares pattern images before and after the steel product has got deformed, and obtaining a distortion intra-plane distribution from moving quantities of the respective image regions. There is not particular limit to the random pattern forming method. For example, characters (including alphanumeric character, hirakana, katakana and Chinese character) having a predetermined dimension (equivalent to a resolution equal to or less than about a partial region in which the distortion is specified) may be formed by coating on the surface of the steel product. Designs and patterns other than the characters, which are different in the respective regions, may also be formed. For example, the coating may be applied over the surface of the material by forming such patterns as to vary a type of a hatching pattern, a line width, line spacing, and a line curvature with random numbers. The example of FIG. 4 exhibits the distortions at respective points (x1, y1)~(xm, yn) of the steel product when a predetermined stress 0 is applied to these respective point of the steel product. A maximum distortion of the steel product concerned is retained in the item "DIC test measurement result maximum distortion".

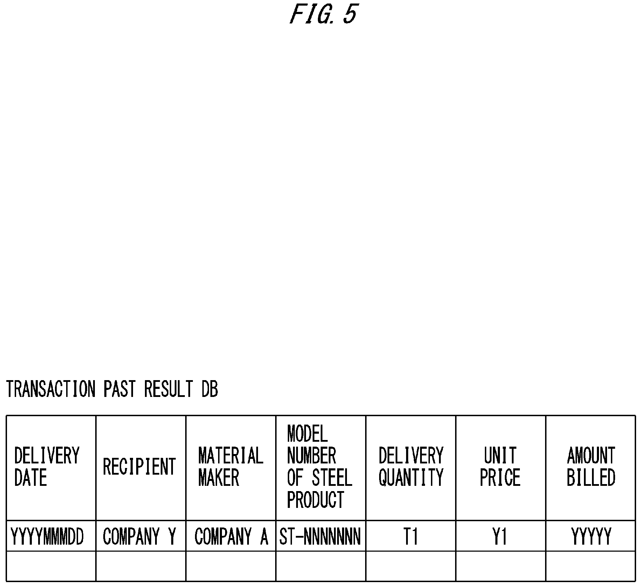

FIG. 5 illustrates a data structure of the transaction past result DB 123. In this example, the transaction past result DB 123 has data of fixed length records each recording a delivery date, a delivery recipient, a material maker, a steel product model number, a delivery quantity, a unit price, and an amount billed. The transaction past result DB 123 may, however, have the Key-Value formatted data. The transaction past result database may also be structured as, e.g., a set of tables that are different per delivery recipient or per material maker without being limited to the table such as the transaction past result DB 123. In other words, the transaction past result DB 123 may take a structure hierarchized with specific items in place of a normalized flat table. The transaction past result DB 123 is one example of a "transaction past result database to record sales past results containing information specifying a material user as a purchaser of the material commercial product".

**<Processing Flow>**

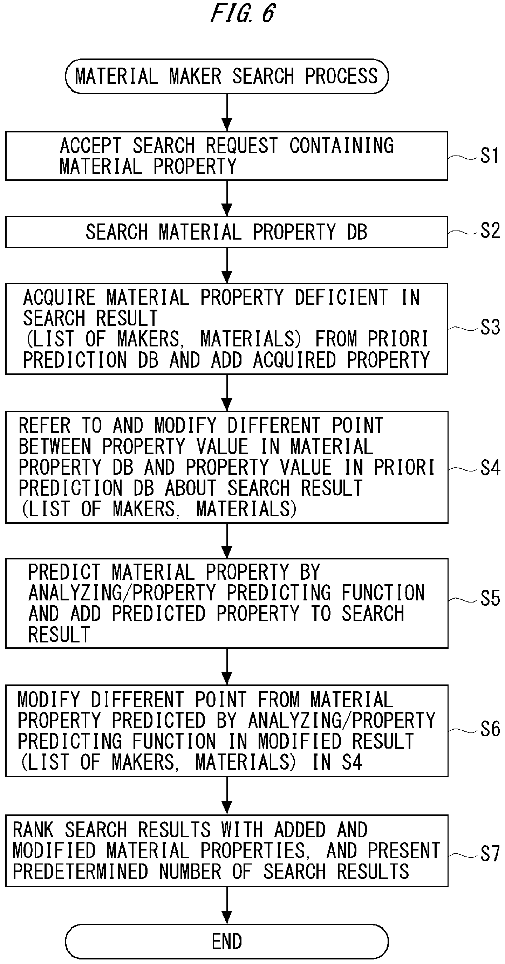

FIG. 6 illustrates processes of the transaction support system according to the Embodiment 1. In these processes, the EC site computer 110 accepts a search request specifying the search conditions containing the material properties from the material user computer 210 (S1). The process in S1 may be said to be one example of a "step of accepting setting of search conditions containing properties of a material commercial product". Thereupon, the EC site computer 110 searches the material user computer 210 for the material having the material properties specified by the search conditions (S2). The process in S2 may be said to be one example of a "step of searching the material user computer 210 for a material commercial product fulfilling at least a part of the search conditions". As a result, the EC site computer 110 acquires the search results matching with the search conditions within a range specifiable in the material property DB 121. The search results contain the materials and the material makers for manufacturing and selling the materials, which fulfill the search conditions within the range specifiable in the material property DB 121. However, in these search results, the material properties not contained in the material property DB 121 do not fulfill the search conditions. When items of indispensable conditions are specified in the search conditions accepted in S1, the EC site computer 110 may exclude, from the search results, the materials obviously not fulfilling the items of the indispensable conditions within the range specifiable in the material property DB 121. While on the other hand, the EC site computer 110 may set the search results containing the materials fulfilling the items of the indispensable conditions within the range specifiable in the material property DB 121 but not fulfilling the items other than the items of the indispensable conditions.

Next, the EC site computer 110 acquires, from the priori prediction DB 122, the material properties insufficient for the search conditions specified in the search results (a list of property data containing the material makers and the materials) acquired in S2, and adds these acquired material properties (S3) . The EC site computer 110 executes the process in S3 as one example of "acquiring added information to be added to material commercial product information stored in a material property database with respect to material commercial products fulfilling at least a part of the search conditions". The EC site computer 110 acquires property values checked against the search results (the list of makers and materials) in S2 from the priori prediction DB 122. The EC site computer 110 checks different points with respect to the same items between the property values in the material property DB 121 and the property values in the priori prediction DB 122, and modifies the differences (S4) . The EC site computer 110 executes the process in S4 as one example of "acquiring check information to be checked against the material commercial product information stored in the material property database with respect to the material commercial products fulfilling at least a part of the search conditions". The processes in S3 and S4 may be said to be one example of "acquiring at least one of the added information to be added to the material commercial product information and the check information to be checked against the material commercial product information from a priori prediction database".

Next, the EC site computer 110 predicts the material properties by the analyzing/property predicting function 132, and adds the predicted material properties to modified results (a list of the makers and the materials) in S4 (S5). The EC site computer 110 further modifies different points between the modified results (the list of the makers and the materials) in S4 and the material properties predicted by the analyzing/property predicting function 132 (S6) .

The EC site computer 110 ranks the search results with the material properties added and modified in the processes in S3 through S6, then transmits the ranked search results to the material user computer 210, and presents a predetermined number of search results (S7). Ranking may be attained by, when fulfilling the items specified by the search conditions, giving, e.g., points and adding the points to all of the specified items. The point per item may be set as a point different corresponding to a weight of the item. The weight of the item may be set corresponding to user's designations (indispensable, important, general, and for reference) to the item. The predetermined number of search results to be presented is determined as a default value, and may also be set changeable by the user. The EC site computer 110 executes the process in S7 as one example of "means to specify recommended material commercial products recommended for the search conditions and providers of the recommended material commercial products, based on the search results of search means and acquired results of acquiring means" . The EC site computer 110 also executes the process in S7 as one example of a "step of specifying recommended material commercial products recommended for the search conditions and providers of the recommended material commercial products, based on the search results in searching step and acquired results in acquiring step".

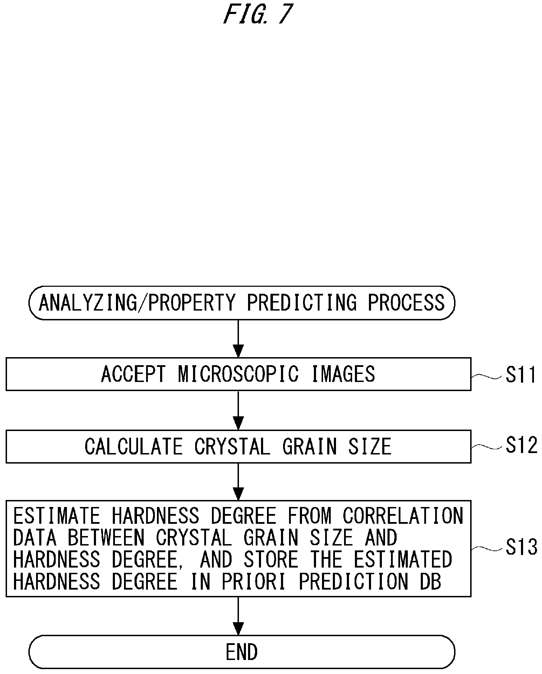

FIG. 7 illustrates an example of a process of obtaining a hardness degree of the material on the basis of a microscopic image. The EC site computer 110 executes processes in FIG. 7 according to a computer program corresponding to the analyzing/property predicting function 132. In these processes, the EC site computer 110 accepts a steel product image captured by the microscope (S11). The microscopic image is transmitted from another computer via the communication network N4 and other equivalent networks connected to the communication interface 16. A desirable microscopic image is enlarged to such an extent as to count the crystal grain boundaries of the steel product by performing the image processing, and the magnification is as large as about several tens of times through several hundreds of times. For example, it may be sufficient that the microscope magnification to be inputted is fixed beforehand such as 100 times. However, the EC site computer 110 may also accept the magnification together with the microscopic image. The EC site computer 110 executes the process in S11 as one example of "means to accept an input of an object image obtained by capturing an image of a structure of the material commercial product". The microscopic image enlarged to such an extent as to count the crystal grain boundaries of the steel product by performing the image processing is one example of a "structural image".

Then, the EC site computer 110 calculates the crystal grain size from the microscopic image (S12) . A first method of obtaining the crystal grain size is a method of binarizing the microscopic image by the image processing, obtaining the grain boundaries (edges) from the binarized image, and obtaining the number of the crystal grains defined as a number of regions closed by closed curves. The EC site computer 110 calculates the crystal grain size number $G=(\log n/\log 2)+1$ by using the number n of the crystal grains within 1 square inch on the basis of the magnification of the microscope. The EC site computer 110 obtains an average crystal grain size from the crystal grain size number G in accordance with the predetermined conversion chart.

A second method of obtaining the crystal grain size is a method called a "cutting method" of superposing test lines instanced by a circle and a straight line on the binarized image, and obtaining the crystal grain size number G prescribed by standards instanced by American Society for Testing and Materials (ASTM) from a number of intersections between the test lines and the grain boundaries. A procedure of obtaining the average crystal grain size from the crystal grain size number G is based on the predetermined conversion chart in the same way as by the first method.

The EC site computer 110 estimates, based on the average crystal grain size (or the crystal grain size number G), the hardness degree from the correlation data between the crystal grain size and the hardness degree, and stores the average crystal grain size (or the crystal grain size number G), the hardness degree and other equivalent items together with the maker name of the steel product and the model number of the steel product in the priori prediction DB 122 (S13). Note that the correlation data between the crystal grain size and the hardness degree may involve using, e.g., the data disclosed in Non-Patent Document 1 and other equivalent documents, and may also be previously measured about a plurality of steel products serving as a reference. The EC site computer 110 executes the processes in S11 and S12 as one example of "estimation means to estimate properties of the material commercial product by analyzing an object image captured by shooting at least a part of the surface or a section of the material commercial product". The EC site computer 110 executes the process in S13 as one example of "acquiring at least one of the added information to be added to the material commercial product information and the check information to be checked against the material commercial product information from an estimation result of the estimation means". The EC site computer 110 executes the processes in S12 and S13 as one example of "means to obtain the properties of the material commercial product from the object image captured by shooting a structure".

In the processes of FIG. 7, the EC site computer 110 stores the average crystal grain size (or the crystal grain size number G), the hardness degree and other equivalent items together with the maker name of the steel product and the model number of the steel product in the priori prediction DB 122, and it does not, however, mean that the processes of the present transaction support system 100 are limited to those in FIG. 7. For example, the priori prediction DB 122 may also previously store a crystal image together with an identifier for identifying each material, the material name, the material master and other equivalent items. In the process in S5 of FIG. 6, the EC site computer 110 may also, when predicting the properties of the material, obtain the average crystal grain size (or the crystal grain size number G) by reading the microscopic image of the search object material from the priori prediction DB 122 and executing the processes in S12 and S13.

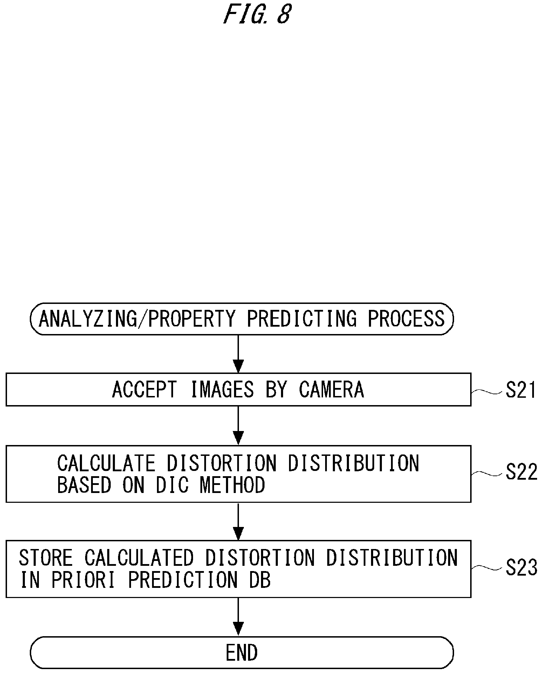

FIG. 8 illustrates processes of obtaining a distribution distribution based on digital images captured by a camera. In these processes, the images of the material surface before and after the material has got deformed are captured based on the DIC method by deforming the material, of which the surface is depicted with the random pattern. The EC site computer 110 acquires a couple of digital images of the material surface before and after the material has got deformed, and compares these digital images, thereby obtaining the distortion distribution of the respective portion of the material. For acquiring the digital images of the material surface before and after the material has got deformed, the intermediate agent or another equivalent person prepares a test piece of the steel product beforehand, forms the random pattern, and prepares a testing device for capturing the images of the test piece in a way that applies the stress to the test piece for deforming the test piece. However, when the camera 410 illustrated in FIG. 1 captures the image of the test piece, it may be sufficient to prepare a stress generating device that applies a predetermined stress to the test piece. A device available as the stress generating device may be configured to apply a specified pressure to a specific position of the test piece by fixing the test piece, or configured to apply a specified tensile stress to the test piece by fixing the test piece. For instance, the available device may be configured to include grippers (vises, helical chucks) for gripping both ends of the test piece and to apply a bending pressure by an actuator in the vicinity of a middle point between two positions gripped by the grippers. A further available testing device may be configured to include the grippers that grip both ends of the test piece, a load meter to measure the stress applied to the gripper as well as to fix one gripper, and the actuator to get the other gripper close to one gripper (to apply a compression pressure) or get the other gripper away from one gripper (to apply a tensile pressure). Herein, the actuator may be of a hydraulic type and may also use an electric motor. The testing device described above is enabled to set a value of the pressure or the tensile stress applied to the test piece, and may simply control the actuator so that a measured value of the load meter is coincident with the set value. Note that the test piece is not needed when the steel product is a tabular or linear sample.

The test is performed in the following steps by preparing the testing device described above.

(Step 1) The random pattern is formed on the test piece.
(Step 2) A photo before being deformed is taken.
(Step 3) The steel product is deformed by applying the stress.
(Step 4) A photo after being deformed is taken.
(Step 5) The photos before and after being deformed are transmitted to the EC site computer 110.

Note that the stress at the testing time may be transmitted together with the photos, and the test may also be performed by using a stress having a specified value shared between the EC site computer 110 and the testing device. The two digital images captured before and after applying the predetermined stress to the steel product formed with the random pattern, are acquired in the steps d escribed above.

The EC site computer 110 accepts, as the object images, the two digital images captured before and after applying the stress in the procedure described above (S21). In this case, the image captured before applying the stress is one example of a "first image", and the image captured in a stress-applied state is one example of a "second image". Next, the EC site computer 110 estimates portions corresponding to partial images from the two digital images before and after applying the stress. The EC site computer 110 calculates the distortion distribution at each point of the digital images from a corresponding relationship based on a correlation between the two partial images (S22) . For example, the EC site computer 110 segments the first image, i.e., the image captured before applying the stress into predetermined partial regions. It may be sufficient to search for a pattern matching with a pattern within the segmented partial region by template matching or another equivalent matching on the second image, i.e., the image captured in the stress-applied state. The EC site computer 110 may simply perform the template matching described above with respect to the patterns of all of the partial regions within the first image.

The EC site computer 110 stores the calculated distortion distribution together with the maker name of the steel product and the model number of the steel product in the priori prediction DB 122 (S23). The EC site computer 110 executes the processes in S21 and S22 as one example of "estimation means to estimate properties of the material commercial product by analyzing an object image captured by shooting at least a part of the surface or a section of the material commercial product". The EC site computer 110 executes the process in S23 as one example of "acquiring at least one of the added information to be added to the material commercial product information and the check information to be checked against the material commercial product information from the estimation result of the estimation means".

In the processes of FIG. 8, the EC site computer 110 stores the calculated distortion distribution together with the maker name of the steel product and the model number of the steel product in the priori prediction DB 122, and it does not, however, mean that the processes of the present transaction support system 100 are limited to those in FIG. 8. For example, the priori prediction DB 122 may previously store a couple of images before and after being deformed together with the identifier for identifying each material, the material name and the material maker. In the process in S5 of FIG. 6, the EC site computer 110 may also, when predicting the properties of the material, obtain the distortion distribution by reading the two images when testing the search object material from the priori prediction DB 122 and executing the processes in S22 and S23.

The EC site computer 110 does not necessarily execute the processes in FIGS. 7 and 8. For example, another computer connected to the microscope or still another computer enabled to input the images captured by the camera may execute the processes in FIGS. 7, and may store the hardness degree of the steel product or the distortion distribution, which are obtained as an execution result, in the priori prediction DB 122. The processes in FIGS. 7 and 8 may also be executed by another computer, e.g., Digital Signal Processor (DSP), which cooperates with the EC site computer 110, or a computer including hardware dedicated to the image processing, a neuro-computer and other equivalent computers.

**<Effect of Embodiment 1>**

As described above, the transaction support system according to the Embodiment 1 acquires the data indicating the properties of the materials, based on the information given from the acquisition routes other than the acquisition routes from the material makers in addition to the material property DB 121 based on the spec sheets and the catalogues of the material makers. The material users are therefore enabled to refer to the materials with the properties being grasped, which are unclear from only the information about the material properties acquired from the spec sheets and the catalogues of the material makers. The material users are also enabled to acquire the property values modified in the proper direction even when the items of information acquired from the spec sheets and the catalogues of the material makers are evaluated excessively high in terms of the performances.

More specifically, the priori prediction DB 122 according to the Embodiment 1 contains the data obtained such that the intermediate agent himself or herself or a third party consigned by the intermediate agent tests, analyzes, analytically studies and evaluates the materials stored in the material property DB 121. When accepting the search request specifying the search conditions containing the properties and other equivalent items of the materials from the material user computer 210, the EC site computer 110 searches the priori prediction DB 122 for the data as well as searching the material property DB 121 for the data, thereby acquiring search results about the materials fulfilling the search conditions and the material makers that manufacture and sell the materials. The EC site computer 110 is therefore enabled to provide the material users with the search results narrowed down to the materials matching with the search conditions and the material makers thereof by searching the priori prediction DB 122 for the data even when it is unclear, from the information about the material properties acquired from the spec sheets and the catalogues of the material makers, whether to fulfill the search conditions.

The EC site computer 110 comparatively checks the data of the material property DB 121 against the data of the priori prediction DB 122, thereby replacing the data of the material property DB 121 with the data of the priori prediction DB 122 or modifying the data of the material property DB 121 on the basis of the data of the priori prediction DB 122 when the data of the material property DB 121 do not match with the data of the priori prediction DB 122. The EC site computer 110 is consequently enabled to obtain the search results narrowed down to the materials more properly matching with the search conditions and the material makers thereof owing to the data of the priori prediction DB 122 even when the performances are evaluated excessively high by the information acquired from the spec sheets and the catalogues of the material makers.

The EC site computer 110 is further enabled to obtain the search results narrowed down to the materials more properly matching with the search conditions and the material makers thereof owing to the material properties predicted by the analyzing/property predicting function 132. Especially, the EC site computer 110 accepts the input of the images of the surface or the section of the material, then estimates the properties of the material, and saves the estimated properties in the priori prediction DB 122. Accordingly, the EC site computer 110 performs the search for the material by employing the estimated properties as well as using the properties of the material property DB 121. The intermediate agent is therefore enabled to acquire the information to be added to the material property DB 121 and comparatively checked against the data of the material property DB 121 on the basis of the information obtained from the spec sheets and the catalogues of the material makers simply by preparing, e.g., the images of the surfaces or the sections of the materials.

More specifically, the analyzing/property predicting function 132 accepts the input of the images obtained from the microscope, calculates based on the inputted images the crystal grain size of the material, and estimates the hardness degree of the material. The present transaction support system is therefore enabled to indirectly estimate the hardness degree of the material by a simple method, and to make the comparative check against the data of the material property DB 121. The analyzing/property predicting function 132 accepts the input of the two images before and after applying the stress to the steel product formed with the random pattern, and estimates, based on the inputted images, the distortion distribution of the material. The transaction support system 100 is therefore enabled to indirectly estimate the distortion distribution of the material by the simple method, and to make the comparative check against the data of the material property DB 121.

## [Embodiment 2]

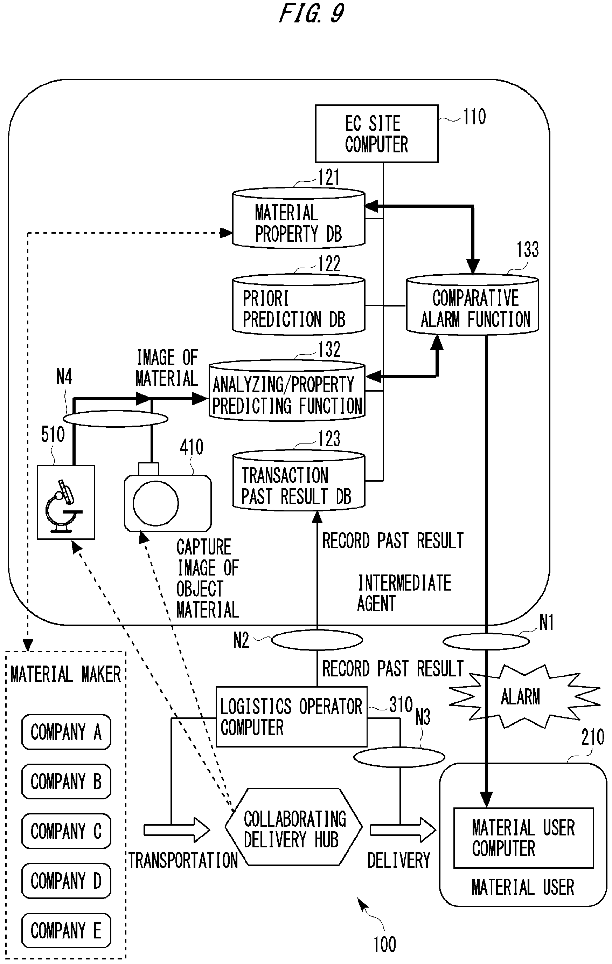

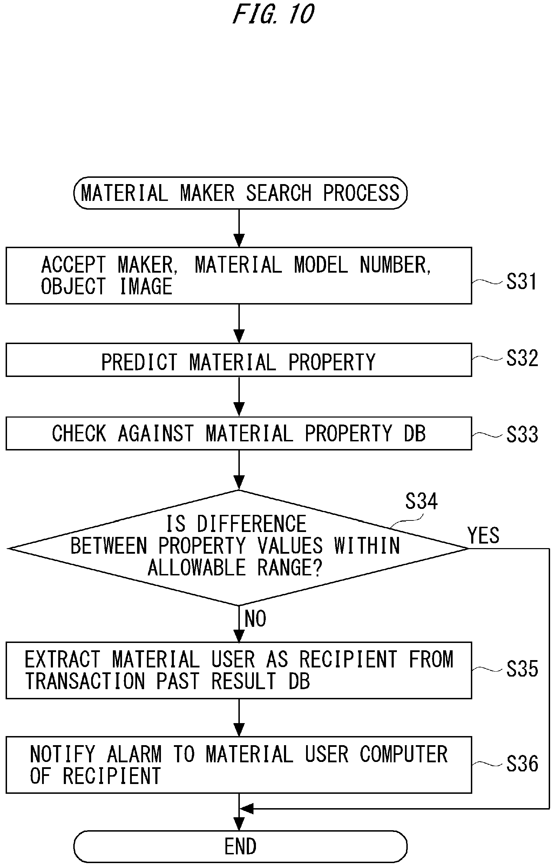

The transaction support system 100 according to an Embodiment 2 will be described with reference to FIGS. 9 and 10. In the Embodiment 1, the transaction support system 100 has exemplified the search process for finding out the materials having the properties desired by the material users and the material makers that manufacture and sell the materials. In the Embodiment 2, the transaction support system 100 will exemplify a process of detecting a change in the spec sheet of the material and issuing an alarm on the basis of the microscopic image of the material supplied to the material user via the collaborating delivery hub and other equivalent facilities, or the two digital images and other equivalent images captured by the camera 410 before and after applying the stress to the steel product formed with the random pattern. Other components and operations of the transaction support system 100 according to the Embodiment 2 are the same as those in the case of the Embodiment 1. Such being the case, the same components of the transaction support system 100 according to the Embodiment 2 as those in the Embodiment 1 are marked with the same numerals and symbols, and their repetitive explanations are omitted.

FIG. 9 illustrates a configuration of the transaction support system 100 according to the Embodiment 2. As in the Figure, the Embodiment 2 is different from the Embodiment 1 in terms of providing a comparative alarm function 133. To be specific, the EC site computer 110 receives via the communication network N4 the images of the microscopic photos of the material delivered to the material user via the delivery hub, or the two digital images and other equivalent images captured by the camera before and after applying the stress in a way that arranges the random pattern on the steel product. The EC site computer 110 obtains the average crystal grain size of the steel product and further obtains the hardness degree through the analyzing/property predicting function 132 from the microscopic images. The EC site computer 110 obtains the distortion distribution of each of the points of the steel product from the two digital images captured by the camera before and after applying the stress by the DIC method.

The EC site computer 110 compares, through the comparative alarm function 133, the hardness degree, obtained based on the analyzing/property predicting function 132, of the steel product with the hardness degree of the same steel product (specified by the material maker and the model number) that is stored in the material property DB 121. The EC site computer 110 further compares, through the comparative alarm function 133, the distortion distribution, obtained based on the analyzing/property predicting function 132, of the steel product with the distortion distribution of the same steel product (specified by the material maker and the model number) that is stored in the material property DB 121. When a difference over an allowable range exists as a result of the comparison, the EC site computer 110 notifies the material user computer 210 of an alarm. The comparative alarm function 133 is one example of "means to issue an alarm when material commercial product properties obtained from the object images with respect to the material commercial product with its sales past result being recorded do not match with the material commercial product properties retrieved from the material property database". Accordingly, a phrase "not matched with" implies existence of the difference over the allowable range between the properties of the material that are obtained by the analyzing/property predicting function 132 and the properties of the same material that are stored in the material property DB 121.

FIG. 10 is a flowchart illustrating a comparative alarm process in the Embodiment 2. In this process, the EC site computer 110 accepts object images together with maker identifying information instanced by the maker name, and the material model number (S31). The EC site computer 110 executes a process in S31 as one example of "accepting an input of object images containing an image captured by shooting at least a part of the surface or the section of the material commercial product". The object images are exemplified by images of a microscopic photo captured by shooting grain boundary patterns of the material to be delivered to the material user via the delivery hub, or two digital images captured by the camera before and after applying the stress in a way that arranges a random pattern on the steel product".

Next, the EC site computer 110 predicts the properties of the material from the object images (S32). The material property to be predicted is, e.g., the hardness degree of the steel product, which is based on the crystal grain size (the average crystal grain size or the crystal grain size number G) of the microscopic photo. The material property to be predicted is also, e.g., the distortion distribution of the steel product which is obtained by applying the DIC method to the two digital images . The EC site computer 110 executes a process in S32 as one example of "obtaining first property information about one property of the material commercial product from the object images".

Subsequently, the EC site computer 110 reads the material property of the material with its property being predicted in S32 from the material property DB 121. The EC site computer 110 checks the material property predicted in S32 against the same property of the same material, which is stored in the material property DB 121 (S33). The EC site computer 110 executes the process in S33 as one example of "reading second property information about one property from the material property database storing property information about the properties of the material commercial product provided from a supplier of the material commercial product".

The EC site computer 110 determines whether a difference between a material property value predicted in S32 and a property value stored in the material property DB 121 is within an allowable range (S34). When within the allowable range, any notification of the alarm is not made. Whereas when the difference between the property values is not within the allowable range, the EC site computer 110 searches the transaction past result DB 123 on the basis of the maker identifying information such as the maker name of the material, the material model number and other equivalent items, and thus extracts the material user as the delivery recipient of the material (S35). The EC site computer 110 notifies the extracted material user of the alarm (S36). Herein, an expression "the difference between the property values is not within the allowable range" connotes that with respect to the same material, a difference between the material hardness degree calculated in S32 and the hardness degree stored in the material property DB 121 exceeds a predetermined limit value. The expression "the difference between the property values is not within the allowable range" also connotes that a number of such portions that with respect to the same material, a difference between an intra plane distortion distribution of the material calculated in S32 and an intra plane distortion distribution stored in the material property DB 121, is equal to or larger than a predetermined number. It may be sufficient that the foregoing predetermined limit value and predetermined number are saved as empirical values or system setting values in the main storage device 12, the external storage device 14 of the EC site computer 110 and other equivalent storages.

A phrase "addressed to the material user" in the process of S36 connotes that the alarm is transmitted to, e.g., a mail address of the material user computer 210 as an addressee. The alarm is not, however, limited to the mail. For example, on an HTTP (HyperText Transfer Protocol) platform, the EC site computer 110 may notify the alarm to an application program enabled to receive the alarm at an IP address of the material user computer 210 through push type communications. The EC site computer 110 executes the processes in S35 and S36 as one example of "issuing an alarm to the material user as a purchaser of the material commercial product when the property, obtained from the object images, of the material commercial product does not match with the property, retrieved from the material property database, of the material commercial product". The EC site computer 110 also executes the process in S35 and S36 as one example of "issuing an alarm to a delivery recipient of the material commercial product when with respect to one property of the material commercial product, the first property information does not match with the second property information.

As described above, according to the Embodiment 2, there are obtained the images of the microscopic photo of the material delivered to the material user via the collaborating delivery hub and the two camera images before and after applying the stress to the material on which the random pattern receiving application of the DIC method is arranged, and these obtained images are transmitted to the EC site computer 110 via the communication network N4. The EC site computer 110 estimates the material property of the steel product from these images, and makes the comparative check against the material property stored in the material property DB 121. As a result of the comparative check, a difference over the predetermined limit exists between the property value estimated from the images and the property value stored in the material property DB 121, in which case the EC site computer 110 notifies the material user computer 210 of the alarm. The EC site computer 110 is therefore enabled to issue the alarm when a change occurs in the material property in such a situation that a continuous sales contract is temporarily established between the material user and the material maker and that the material maker continuously delivers the materials to the material user. Accordingly, the material user is enabled to recognize the change in the material property at an early stage.

The transaction support system 100 according to the Embodiment 2 includes an input interface of the image data of the grain boundary pattern of the crystal grains or the random pattern on the surface of the steel product before and after applying the stress. The acquisition of the image of the grain boundary pattern entails capturing an image of the section of the sample via steps of cutting out the sample, embedding, polishing and etching. The acquisition of the patterns before and after applying the stress to the steel product entails forming the random pattern and capturing images of the surface of the steel product before and after applying the specified stress. However, the collaborating delivery hub is provided with a testing facility for working the sample or applying the stress, and the EC site computer 110 is provided with the images via the communication network N4 from the camera 410, the microscope 510 and is thereby enabled to execute acquiring the distortion distribution of the steel product and calculating the hardness degree from the grain boundary pattern, and to execute the comparative check against the property data of the material property database based on the spec sheets, the catalogues and other equivalent data provided from the respective material makers.

As discussed above, it is feasible to carry out, before the delivery, the operation of verifying the properties of the materials delivered to the material users from the respective material makers, and the continuous transaction of the materials is kept in a state of the material properties being maintained. Supposing that the material property is changed by the material maker, the material user is able to recognize the change in the material property at the early stage. It is also feasible to continuously monitor and verify the material properties not disclosed in the spec sheets as in the case of the intra-plane distortion distribution of the steel product.

**[Embodiment 3]**

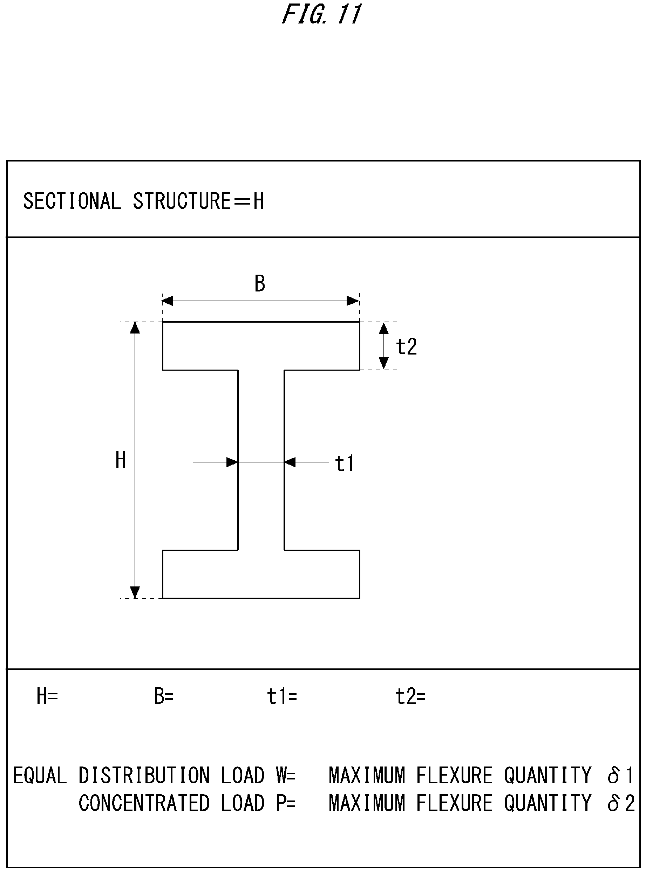

The transaction support system 100 according to an Embodiment 3 will be described with reference to FIGS. 11 through 13. The Embodiment 1 has exemplified the search process, executed by the transaction support system 100, of finding out the materials having the properties desired by the material users and the material makers that manufacture and sell the materials. The Embodiment 2 has exemplified the process of detecting the change in the spec of the material and issuing the alarm, based on the microscopic photo of the material supplied to the material user via the collaborating delivery hub, or the two digital images captured by the camera 410 before and after applying the stress to the steel product formed with the random pattern. In the Embodiment 3, the transaction support system 100 provides a function of receiving designated conditions about material dynamic properties such as a flexure and a maximum distortion when applying a load to the steel product, and searching for the material having a structural property fulfilling the designated conditions.

Such a case arises that the material user is unable to predict, on the occasion of selecting the material, the material property unless the structure of the member is determined. For example, a mechanical system designer puts significance on the material dynamic properties, i.e., a bending moment, shearing force, the flexure and the distortion of the material in some cases. Such a material dynamic property may be said to be one (category) of physical properties. The conditions of the flexure and the maximum distortion when applying the load to the steel product may be said to be conditions about the physical properties to be fulfilled by the material. Other components and operations of the transaction support system 100 according to the Embodiment 3 are the same as those in the Embodiments 1 and 2. Such being the case, the same components of the transaction support system 100 according to the Embodiment 3 as those in the Embodiments 1 and 2 are marked with the same numerals and symbols, and their repetitive explanations are omitted. Accordingly, a configuration of the transaction support system 100 according to the Embodiment 3 is basically illustrated in FIG. 1 or FIG. 9.

FIG. 11 illustrates one example of a user interface used by the material user for designating dimensions and lengths of respective portions, each taking a sectional shape, of a structural material taking an H-shape in section and a load, and designating a maximum flexure quantity when applying the load in a direction orthogonal to a longitudinal direction (axial direction of the material) . The EC site computer 110 of the transaction support system 100 that provides the user interface in FIG. 11 may be said to provide means to accept the designation of the conditions about the physical properties. Designated in the user interface in FIG. 11 are a height H and a breadth B of the section of the H=shaped structural material, a thickness t1 of a central portion of the H-shape, thicknesses t2 of both sides (upper and lower portions in FIG. 11) and a length L. Designated further are a maximum flexure quantity $\delta 1$ given when supporting both ends of the structural material in the longitudinal direction and when applying a load W distributed equally to the structural material, and a maximum flexure quantity $\delta 2$ given when supporting both ends of the structural material in the longitudinal direction and when applying a concentrated load P to a central portion in the longitudinal direction. For example, when applying the concentrated load P, the maximum flexure quantity $\delta 2$ may be written in the following Expression 1.

$$\delta2=P*L^{3}/(48*E*I);\quad (Expression\ 1)$$

where E is Young's modulus (also called Young's modulus of elasticity), and I is a sectional secondary moment. A slash (/) indicates division, and an asterisk (*) indicates multiplication. The sectional secondary moment is a value obtained by integrating $Y^2$ in an X-axis direction when the sectional shape is described as, e.g., a Y's value with respect to X in X-Y coordinates, and is calculated from the sectional shape. From the Expression 1 given above, Young's modulus satisfying the maximum flexure quantity $\delta 2$ is obtained by an Expression 2 that follows .

$$E \geq P*L^3/(48*\delta 2*I); \quad (\text{Expression 2})$$

where ">=" is an inequality sign indicating that a value of a left-hand side is equal to or larger than a value of a right-hand side. The transaction support system 100 according to the Embodiment 3 is therefore enabled to limit the search to the material fulfilling the conditions of the physical properties of the material of the material user, e.g., such a material that the maximum flexure quantity with respect to the load P in the direction orthogonal to the longitudinal direction of the length L is equal to or smaller than $\delta 2$ as well as being the structural material taking the H-shape in section. However, FIG. 11 is just an exemplification, and it does not mean that the sectional shape of the structural material is limited to the H-shape. In other words, the transaction support system 100 is enabled to search the material property database 121 and the priori prediction database 122 for the materials instanced by bar materials taking a square shape, an L-shape, a C-shape (open shape with one side of the square shape in section being removed) and an annular shape in section similarly by designating the material dynamic properties.

It does not mean that the material dynamic property is limited to the flexure of the bar material. Further, it does not mean that the search target material is limited to the steel product. In other words, the transaction support system 100 accepts designations of the material dynamic properties, e.g., the flexure of the bar material, a vertical distortion in the axis direction and a shearing distortion in the direction orthogonal to an axial line with respect to the structural materials instanced by nonferrous metal materials, woods, resin material, stones, ceramics and glass, and is capable of searching for the material concerned. It does not mean that the designation of the material dynamic property is limited to what the property is describable by an analytical expression as by the Expression 1.

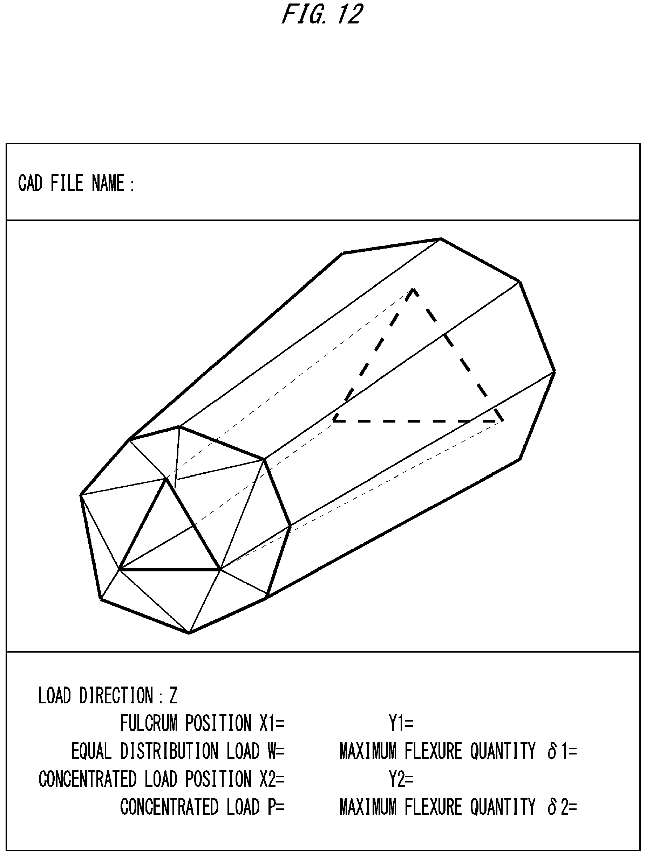

FIG. 12 illustrates a user interface accepting conditions for such a structural material that conditions about the material dynamic property is not analytically calculable due to intricacy in shape. The transaction support system 100 provides the material user with an analyzing means based on a finite element method about the structural material with the material dynamic property not being calculable analytically. The EC site computer 110 of the transaction support system 100 providing the user interface in FIG. 12 may be said to provide means to accept the designation of the conditions about the physical property.

The material user designates a file of analysis target CAD (Computer Aided Design) data on a screen in FIG. 12. It does not mean that there is a limit to a CAD data format, but the CAD data may take any format as far as enabling conversion of the data into elements of the finite element method. For example, It may be sufficient that a three dimensional shape is written by an aggregation of polygons.

The transaction support system 100 further accepts the designation of the flexure quantity when the structural material is sustained in a cantilever-like shape in a fulcrum position (X1, Y1) by assuming a load given from a predetermined load direction, e.g., a Z-direction. The transaction support system 100 accepts the maximum flexure quantity $\delta 1$ for, e.g., an equal distribution load W, and the maximum flexure quantity $\delta 2$ given when the concentrated load P is applied in a load position (X2, Y2) . The transaction support system 100 searches the material property DB 121 and the priori prediction DB 122 for the materials fulfilling these maximum flexure quantities .

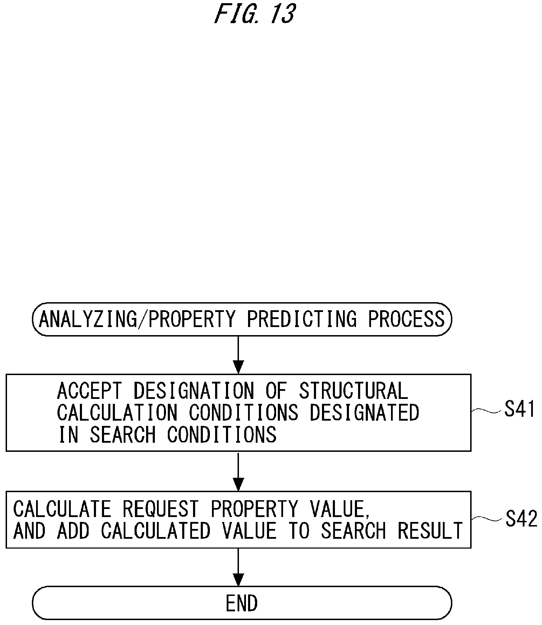

FIG. 13 illustrates processes of the transaction support system according to the Embodiment 3. These processes may be said to be one example of the processes in S1 and S2 of FIG. 6. To be specific, the processes in FIG. 13 may be said to be one example of the processes in which the EC site computer 110 accepts the search request designating the search conditions containing the material properties from the material user computer 210, and searches the material property DB 121 for the materials having the material properties designated in the search conditions. These processes may also be a processing example of the processes in S1 and S3 of FIG. 6 in the Embodiment 1. In other words, the processes in FIG. 13 may be said to be a processing example in which the EC site computer 110, when having searched the material property DB 121 for the material being partially unclear about the material properties designated in the search conditions, searches the priori prediction DB 122 for an insufficient material property. These processes may also be a detailed example of the process in which the EC site computer 110 predicts the material properties as executed in S5 of FIG. 6 in the Embodiment 1. In other words, these processes may be said to be a detailed example of the process of predicting the material properties and adding the predicted properties to the search result by the analyzing/property predicting function 132.

In this process, the EC site computer 110 accepts structural calculation conditions designated in the search conditions (S41). The structural calculation conditions are, as illustrated in FIG. 11, a sectional shape of the bar material, dimensions (a width, a height, a thickness of the tabular portion, a diameter of the annularity, a thickness of the material) of the respective portions of the section, an axis-directional length of the bar material, a value of the equal distribution load W, a value of the concentrated load P, and a maximum flexure dimension. The structural calculation condition is exemplified by the maximum flexure quantity of the structural material sustained in the cantilever shape when the analyzing means by the finite element method for the CAD data depicted in FIG. 12. Note that the analyzing target by the analyzing means using the finite element method may also be an analyzing target taking any shape and structure and using any fulcrum support method as far as being the structural material writable by the CAD data, i.e., the polygons without being limited to the structural material in the cantilever shape. The EC site computer 110 of the transaction support system 100, which executes the process in S41, may be said to provide means to accept the designation of the conditions about the physical properties.

Next, the EC site computer 110 calculates a request property value, e.g., Young's modulus, of the structural material fulfilling the structural calculation conditions. The EC site computer 110 adds the calculated request property value as a condition of the search request in S1 of FIG. 6 to the setting or the conditions (S42), and executes searching the material property DB 121 in S2. Alternatively, the EC site computer 110 executes, when having searched for the material with the properties being partially unclear (the request property value calculated in the process of S42) in the process of S2, searching the priori prediction DB 122 from S3 onward in FIG. 6. Then, the EC site computer 110 executes the processes from S4 onward in FIG. 6.

Alternatively, the EC site computer 110 adds the calculated request property value to the processing result (the respective material properties contained in the list of the makers and the materials) in S5 of FIG. 6 (S42). The EC site computer 110 then executes the processes from S6 onward in FIG. 6, ranks the materials fulfilling the structural calculation conditions in S7, and presents the search result, the EC site computer 110 of the transaction support system 100, which executes the process in S42, may be said to provide to means to search the material property database for the material commercial product fulfilling at least a part of the conditions about the physical properties.

As discussed above, the transaction support system 100 according to the Embodiment 3 is enabled to designate the material dynamic properties, e.g., accept the designation of the structural calculation conditions like the flexure quantity of the bar material, search for the materials fulfilling the accepted structural calculation conditions, rank the materials and present the ranked materials to the material users. In this case, for instance, the structural calculation conditions of the material having the section not varying the same in the axial direction as in the case of the bar material are writable by an analytical mathematical expression according to material dynamics. The transaction support system 100 according to the Embodiment 3 is enabled to provide analyzing means instanced by the finite element method with respect to the material taking the intricate shape unable to be written by the analytical mathematical expression.

Note that the Embodiment 3 given above has discussed the processing example incorporating the processes in FIG. 13 into the process in S1, S2, S3 or S5 of FIG. 6 according to the Embodiment 1. It does not mean in this case that the processes in FIG. 13 are to be executed in combination with all of the processes in FIG. 6. For example, the EC site computer 110 may present the search result in S7 by omitting one or more processes from S3 through S6 when executing the processes of FIG. 13 in S1 and S2 of FIG. 6. In any case, the transaction support system 100 according to the Embodiment 3 is enabled to provide the material user with the search process based on the designation of the material dynamic property.

<<Computer-Readable Recording Medium>>

A program making a computer, other machines and apparatuses (which will hereinafter be referred to as the computer and other equivalent apparatuses) attain any one of the functions, can be recorded on a non-transitory recording medium readable by the computer and other equivalent apparatuses. The computer and other equivalent apparatuses are made to read and run the program on this non-transitory recording medium, whereby the function thereof can be provided. Herein, the non-transitory recording medium readable by the computer and other equivalent apparatuses connotes a non-transitory recording medium capable of accumulating information instanced by data and programs electrically, magnetically, optically, mechanically or by chemical action, which can be read from the computer and other equivalent apparatuses. Among these non-transitory recording mediums, the mediums removable from the computer and other equivalent apparatuses are exemplified by a flexible disc, a magneto-optic disc, a CD-ROM, a CD-R/W, a DVD, a Blu-ray disc, a DAT, an 8 mm tape, and a memory card like a flash memory. A hard disc, a ROM (Read-Only Memory) and other equivalent recording mediums are given as the non-transitory recording mediums fixed within the computer and other equivalent apparatuses. An SSD (Solid State Drive) is also available as the non-transitory recording medium removable from the computer and other equivalent apparatuses and also as the non-transitory recording medium fixed within the computer and other equivalent apparatuses.

**[Description of Numerals and Symbols]**

11      CPU
12      main storage device

14     external storage device
19     image capturing device
110    EC site computer
121    material property DB
122    priori prediction DB
123    transaction past result DB
131    search function
132    analyzing/property predicting function
133    comparative alarm function
210    material user computer
310    logistics operator computer
410    camera
510    microscope

**Claims**

1. A transaction support system comprising:

   means to accept setting of search conditions containing properties of material commercial products;
   a material property database to store material commercial product information containing the properties of material commercial products provided from providers of the material commercial products, and the providers of the material commercial products;
   means to search the material property database for the material commercial product fulfilling at least a part of search conditions;
   acquiring means to acquire at least one of added information added to material commercial product information stored in the material property database and check information checked against the material commercial product information stored in the material property database with respect to the material commercial product fulfilling at least a part of the search conditions; and
   means to specify recommended material commercial products and providers of the recommended material commercial products, the commercial products being recommended for the search conditions based on a search result given by the search means and an acquiring result given by the acquiring means.

2. The transaction support system according to claim 1, further comprising a priori prediction database to store analysis properties, obtained by analyzing the material commercial products, of the material commercial products,
   the acquiring means acquiring at least one of the added information added to the material commercial product information and the check information checked against the material commercial product information from the priori prediction database.

3. The transaction support system according to claim 1, further comprising estimation means to estimate properties of the material commercial product by analyzing an object image captured by shooting at least a part of a surface or a section of the material commercial product,
   the acquiring means acquiring at least one of the added information added to the material commercial product information and the check information checked against the material commercial product information from an estimation result of the estimation means.

4. The transaction support system according to claim 3, wherein the estimation means includes:

   means to accept an input of object images containing a first image captured by forming a random pattern on the surface of the material commercial product, and a second image captured when applying a predetermined stress to the material formed with its surface being formed with the random pattern; and
   means to obtain properties of the material commercial product from the object images.

5. The transaction support system according to claim 3 or 4, wherein the estimation means includes:

   means to accept the input of the object images captured by shooting a structure of the material commercial product; and
   means to obtain the properties of the material commercial product from the object images captured by shooting the structure.

6. The transaction support system according to any one of claims 3 through 5, further comprising:

a transaction past result database to record sales past results containing information specifying a material user as a purchaser of the material commercial product; and
means to issue an alarm to the material user as the purchaser of the material commercial product when material commercial product properties obtained from the object images with respect to the material commercial product with its sales past result being recorded do not match with the material commercial product properties retrieved from the material property database.

7. The transaction support system according to any one of claims 1 through 6, further comprising:

means to accept designation of conditions about a structure possessed by the material commercial product and physical properties to be fulfilled by the material commercial product having the structure; and
means to search the material property database or the priori prediction database for the material commercial product fulfilling at least a part of the conditions about the physical properties.

8. A transaction support system comprising:

means to accept an input of object images containing an image captured by shooting at least a part of a surface or a section of a material commercial product;
means to obtain first property information about one property of the material commercial product from the object images;
means to read second property information about one property from a material property database storing property information about the properties of the material commercial product provided from a supplier of the material commercial product; and
means to issue an alarm to a recipient of the material commercial product when the first property information does not match with the second property information with respect to one property of the commercial product.

9. A transaction support method by which a computer executes:

a step of accepting setting of search conditions containing properties of material commercial products;
a step of searching a material property database for a material commercial product fulfilling at least a part of search conditions, the material property database storing material commercial product information containing properties of material commercial products provided from providers of the material commercial products, and the providers of the material commercial products;
a step of acquiring at least one of added information added to material commercial product information stored in the material property database and check information checked against the material commercial product information stored in the material property database with respect to the material commercial product fulfilling at least a part of the search conditions; and

a step of specifying recommended material commercial products and providers of the recommended material commercial products, the commercial products being recommended for the search conditions based on a search result in the searching step and an acquiring result in the acquiring step.

10. A transaction support method by which a computer executes:

a step of accepting an input of object images containing an image captured by shooting at least a part of a surface or a section of a material commercial product;
a step of obtaining first property information about one property of the material commercial product from the object images;
a step of reading second property information about one property from a material property database storing property information about the properties of the material commercial product provided from a supplier of the material commercial product; and
a step of issuing an alarm to a recipient of the material commercial product when the first property information does not match with the second property information with respect to one property of the commercial product.

**11.** A program for making a computer execute:

a step of accepting setting of search conditions containing properties of material commercial products;

a step of searching a material property database for a material commercial product fulfilling at least a part of search conditions, the material property database storing material commercial product information containing properties of material commercial products provided from providers of the material commercial products, and the providers of the material commercial products;

a step of acquiring at least one of added information added to material commercial product information stored in the material property database and check information checked against the material commercial product information stored in the material property database with respect to the material commercial product fulfilling at least a part of the search conditions; and

a step of specifying recommended material commercial products and providers of the recommended material commercial products, the commercial products being recommended for the search conditions based on a search result in the searching step and an acquiring result in the acquiring step.

**12.** A program for making a computer execute:

a step of accepting an input of object images containing an image captured by shooting at least a part of a surface or a section of a material commercial product;

a step of obtaining first property information about one property of the material commercial product from the object images;

a step of reading second property information about one property from a material property database storing property information about the properties of the material commercial product provided from a supplier of the material commercial product; and

a step of issuing an alarm to a recipient of the material commercial product when the first property information does not match with the second property information with respect to one property of the commercial product.

**13.** A transaction support system comprising:

means to accept setting of search condition containing conditions about a structure possessed by a material commercial product and physical properties to be fulfilled by the material having the structure;

a material property database to store material commercial product information containing properties of the material commercial products provided from providers of the material commercial products, and the providers of the material commercial products; and

means to search the material property database for the material commercial product fulfilling at least a part of the search conditions .

**14.** A transaction support method by which a computer executes:

a step of accepting setting of search condition containing conditions about a structure possessed by a material commercial product and physical properties to be fulfilled by the material having the structure; and

a step of searching a material property database for the material commercial product fulfilling at least a part of the search conditions, the material property database storing material commercial product information containing properties of the material commercial products provided from providers of the material commercial products, and the providers of the material commercial products.

**15.** A program for making a computer execute:

a step of accepting setting of search condition containing conditions about a structure possessed by a material commercial product and physical properties to be fulfilled by the material having the structure; and

a step of searching a material property database for the material commercial product fulfilling at least a part of the search conditions, the material property database storing material commercial product information containing properties of the material commercial products provided from providers of the material commercial products, and the providers of the material commercial products.

## FIG. 1

*FIG. 2*

10

11

| CPU | MAIN STORAGE DEVICE |~12

EXTERNAL INTERFACE |~13

EXTERNAL STORAGE DEVICE |~14

DETACHABLE STORAGE DEVICE |~15

COMMUNICATION INTERFACE |~16

DISPLAY DEVICE |~17

INPUT DEVICE |~18

IMAGE CAPTURING DEVICE |~19

## FIG. 3

MATERIAL PROPERTY DB

```
MAKER NAME= COMPANY A
MODEL NUMBER=NNN;
COMMERCIAL PRODUCT NAME=BR;

FURNACE NUMBER=N-TH FURNACE;
CHEMICAL COMPOSITION=(C:a%,Mn:b%, ···);
TENSILE EVALUATION VALUE=
 (TENSILE STRENGTH:f1, BREAKING ELONGATION:d,
BREAKING ELONGATION RATE=p1, PROOF STRESS:f2, ···);
HARDNESS DEGREE=r1;
PLATING QUANTITY=(DOUBLE FACES:d1,
 UPPER FACE:d2, LOWER FACE:d3)
```

## FIG. 4

PRIORI PREDICTION DB

MAKER NAME= COMPANY A
MODEL NUMBER=NNN;
COMMERCIAL PRODUCT NAME=BR;
FURNACE NUMBER=N-TH FURNACE;
CHEMICAL COMPOSITION=(C:a%,Mn:b%, ···);
TENSILE EVALUATION VALUE=(TENSILE STRENGTH:f1,
 BREAKING ELONGATION:d, BREAKING ELONGATION RATE=p1,
 PROOF STRESS:f2, ···);
HARDNESS DEGREE=r1;
PLATING QUANTITY=(DOUBLE FACES:d1, UPPER FACE:d2,
 LOWER FACE:d3)
 :
NON-METALLIC INCLUSION=(SULPHIDE SERIES:0, ALUMINA
 SERIES:0, SILICATE SERIES:0, GRANULAR OXIDE SERIES:0.1,
 INDIVIDUAL GRANULAR INCLUSION SERIES:0);
ROLLING DIRECTION CRYSTAL GRAIN SIZE=
 (CRYSTAL GRAIN SIZE NUMBER:g1,
 AVERAGE GRAIN DIAMETER: r1);
INTRA ROLLING PLANE VERTICAL CRYSTAL GRAIN SIZE=
 (CRYSTAL GRAIN SIZE NUMBER:g1,
 AVERAGE GRAIN DIAMETER: r1);
ROLLING PLANE VERTICAL DIRECTION CRYSTAL GRAIN SIZE=
 (CRYSTAL GRAIN SIZE NUMBER:g1,
 AVERAGE GRAIN DIAMETER: r1);
SALT WATER SPRAY TEST RESULT=(0h:10, 1h:10, ···,
 48h:rn1, ···, 96h:rn2);
DIC TEST MEASUREMENT RESULT=
 (at: stress0 (x1, y1, strain1),
 (x2, y1, strain1), ···(xm, yn, strain mn));
DIC TEST MEASUREMENT RESULT MAXIMUM DISTORTION=
 (stress0, xk, yk, strain M)

*FIG. 5*

TRANSACTION PAST RESULT DB

| DELIVERY DATE | RECIPIENT | MATERIAL MAKER | MODEL NUMBER OF STEEL PRODUCT | DELIVERY QUANTITY | UNIT PRICE | AMOUNT BILLED |
|---|---|---|---|---|---|---|
| YYYYMMDD | COMPANY Y | COMPANY A | ST-NNNNNNN | T1 | Y1 | YYYYY |
|  |  |  |  |  |  |  |

## FIG. 6

```
( MATERIAL MAKER SEARCH PROCESS )
                    │
                    ▼
┌─────────────────────────────────────┐
│ ACCEPT SEARCH REQUEST CONTAINING    │ ～S1
│ MATERIAL PROPERTY                   │
└─────────────────────────────────────┘
                    │
                    ▼
┌─────────────────────────────────────┐
│ SEARCH MATERIAL PROPERTY DB         │ ～S2
└─────────────────────────────────────┘
                    │
                    ▼
┌─────────────────────────────────────┐
│ ACQUIRE MATERIAL PROPERTY DEFICIENT IN │
│ SEARCH RESULT                       │ ～S3
│ (LIST OF MAKERS, MATERIALS) FROM PRIORI │
│ PREDICTION DB AND ADD ACQUIRED PROPERTY │
└─────────────────────────────────────┘
                    │
                    ▼
┌─────────────────────────────────────┐
│ REFER TO AND MODIFY DIFFERENT POINT │
│ BETWEEN PROPERTY VALUE IN MATERIAL  │
│ PROPERTY DB AND PROPERTY VALUE IN PRIORI │ ～S4
│ PREDICTION DB ABOUT SEARCH RESULT   │
│ (LIST OF MAKERS, MATERIALS)         │
└─────────────────────────────────────┘
                    │
                    ▼
┌─────────────────────────────────────┐
│ PREDICT MATERIAL PROPERTY BY        │
│ ANALYZING/PROPERTY PREDICTING FUNCTION │ ～S5
│ AND ADD PREDICTED PROPERTY TO SEARCH │
│ RESULT                              │
└─────────────────────────────────────┘
                    │
                    ▼
┌─────────────────────────────────────┐
│ MODIFY DIFFERENT POINT FROM MATERIAL │
│ PROPERTY PREDICTED BY ANALYZING/PROPERTY │ ～S6
│ PREDICTING FUNCTION IN MODIFIED RESULT │
│ (LIST OF MAKERS, MATERIALS) IN S4   │
└─────────────────────────────────────┘
                    │
                    ▼
┌─────────────────────────────────────┐
│ RANK SEARCH RESULTS WITH ADDED AND  │
│ MODIFIED MATERIAL PROPERTIES, AND PRESENT │ ～S7
│ PREDETERMINED NUMBER OF SEARCH RESULTS │
└─────────────────────────────────────┘
                    │
                    ▼
           (    END    )
```

*FIG. 7*

```
  ( ANALYZING/PROPERTY PREDICTING PROCESS )
                      │
                      ▼
  ┌─────────────────────────────────────────┐
  │     ACCEPT MICROSCOPIC IMAGES           │ ～S11
  └─────────────────────────────────────────┘
                      │
                      ▼
  ┌─────────────────────────────────────────┐
  │     CALCULATE CRYSTAL GRAIN SIZE        │ ～S12
  └─────────────────────────────────────────┘
                      │
                      ▼
  ┌─────────────────────────────────────────┐
  │ ESTIMATE HARDNESS DEGREE FROM CORRELATION│
  │ DATA BETWEEN CRYSTAL GRAIN SIZE AND      │ ～S13
  │ HARDNESS DEGREE, AND STORE THE ESTIMATED │
  │ HARDNESS DEGREE IN PRIORI PREDICTION DB  │
  └─────────────────────────────────────────┘
                      │
                      ▼
  (                  END                    )
```

## FIG. 8

```
  ( ANALYZING/PROPERTY PREDICTING PROCESS )
                      │
                      ▼
  ┌──────────────────────────────────────┐
  │      ACCEPT IMAGES BY CAMERA         │──── S21
  └──────────────────────────────────────┘
                      │
                      ▼
  ┌──────────────────────────────────────┐
  │   CALCULATE DISTORTION DISTRIBUTION  │──── S22
  │        BASED ON DIC METHOD           │
  └──────────────────────────────────────┘
                      │
                      ▼
  ┌──────────────────────────────────────┐
  │ STORE CALCULATED DISTORTION DISTRIBUTION │──── S23
  │      IN PRIORI PREDICTION DB         │
  └──────────────────────────────────────┘
                      │
                      ▼
  (              END                )
```

# FIG. 9

## FIG. 10

( MATERIAL MAKER SEARCH PROCESS )

↓

| ACCEPT MAKER, MATERIAL MODEL NUMBER, OBJECT IMAGE | ~S31 |

↓

| PREDICT MATERIAL PROPERTY | ~S32 |

↓

| CHECK AGAINST MATERIAL PROPERTY DB | ~S33 |

↓

S34

< IS DIFFERENCE BETWEEN PROPERTY VALUES WITHIN ALLOWABLE RANGE? >  — YES →

NO ↓

| EXTRACT MATERIAL USER AS RECIPIENT FROM TRANSACTION PAST RESULT DB | ~S35 |

↓

| NOTIFY ALARM TO MATERIAL USER COMPUTER OF RECIPIENT | ~S36 |

↓

( END )

## FIG. 11

SECTIONAL STRUCTURE＝H

H=        B=        t1=        t2=

EQUAL DISTRIBUTION LOAD W=    MAXIMUM FLEXURE QUANTITY $\delta 1$
          CONCENTRATED LOAD P=    MAXIMUM FLEXURE QUANTITY $\delta 2$

## FIG. 12

CAD FILE NAME :

LOAD DIRECTION : Z

FULCRUM POSITION X1=          Y1=

EQUAL DISTRIBUTION LOAD W=     MAXIMUM FLEXURE QUANTITY $\delta 1=$

CONCENTRATED LOAD POSITION X2=     Y2=

CONCENTRATED LOAD P=     MAXIMUM FLEXURE QUANTITY $\delta 2=$

*FIG. 13*

```
        ( ANALYZING/PROPERTY PREDICTING PROCESS )
                            │
                            ▼
        ┌──────────────────────────────────────┐
        │  ACCEPT DESIGNATION OF STRUCTURAL       │
        │  CALCULATION CONDITIONS DESIGNATED      │──── S41
        │  IN SEARCH CONDITIONS                   │
        └──────────────────────────────────────┘
                            │
                            ▼
        ┌──────────────────────────────────────┐
        │  CALCULATE REQUEST PROPERTY VALUE,      │──── S42
        │  AND ADD CALCULATED VALUE TO SEARCH RESULT │
        └──────────────────────────────────────┘
                            │
                            ▼
        (              END              )
```

## INTERNATIONAL SEARCH REPORT

| International application No. |
| --- |
| PCT/JP2017/012755 |

**A. CLASSIFICATION OF SUBJECT MATTER**
*G06Q30/06(2012.01)i*

According to International Patent Classification (IPC) or to both national classification and IPC

**B. FIELDS SEARCHED**

Minimum documentation searched (classification system followed by classification symbols)
G06Q30/06, G06Q50/00, G01B11/16

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2002-297942 A (Osaka Gas Co., Ltd.), 11 October 2002 (11.10.2002), paragraphs [0021] to [0081] (Family: none) | 1-15 |
| Y | JP 2010-61379 A (Toshiba Elevator and Building Systems Corp.), 18 March 2010 (18.03.2010), paragraphs [0014] to [0035] & CN 101667269 A | 1-15 |
| Y | JP 2011-7627 A (Kobelco Research Institute, Inc.), 13 January 2011 (13.01.2011), paragraphs [0018] to [0032] (Family: none) | 3-6,8,10,12 |

☐ Further documents are listed in the continuation of Box C.   ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 13 June 2017 (13.06.17) | 20 June 2017 (20.06.17) |

| Name and mailing address of the ISA/ | Authorized officer |
| --- | --- |
| Japan Patent Office 3-4-3,Kasumigaseki,Chiyoda-ku, Tokyo 100-8915,Japan | |
| | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011048667 A
- JP 2009129393 A
- JP 2003345862 A

### Non-patent literature cited in the description

- Interrelationship between Grain Size and Hardness Distributions during Grain Growth in Iron. **YOSHIMASA TAKAYAMA.** Journal of the Japan Institute of Metals and Materials, the Iron and Steel of Japan. General Incorporated Association, June 1989, 579-584

- Hierarchical Strain Distribution Analysis Formed in DP Steel Using a Combination of Metallographic Image and Digital Image Correlation Method. **NOBUO NAKADA.** Iron and Steel, the Iron and Steel Institute of Japan. General Incorporated Association, 30 September 2014, 58-65